# EUROPÄISCHE PATENTSCHRIFT

(11) **EP 2 845 808 B1**
(45) Veröffentlichungstag und Bekanntmachung des Hinweises auf die Patenterteilung: **15.06.2016**
(21) Anmeldenummer: 14180299.1
(22) Anmeldetag: 08.08.2014
(51) Int. Cl.: B64G 1/28, B64G 1/36, G01C 21/02

(54) **Lage- und Orbit-Steuersystem und Verfahren zu dessen Betrieb**
Position and orbit control system and method for operating the same
Système de commande d'orbite et de position et son procédé de fonctionnement

(30) Priorität: 12.08.2013 DE 102013108711
(43) Veröffentlichungstag der Anmeldung: 11.03.2015
(73) Patentinhaber: Jena-Optronik GmbH, 07745 Jena (DE)
(72) Erfinder: Hartmann, Rolf, 07747 Jena (DE); Schrödlbauer, Dieter, 81735 München (DE); Schmidt, Uwe, 07616 Bürgel (DE)
(74) Vertreter: Ege & Lee Patentanwälte

(56) Entgegenhaltungen:
- US-B1- 6 285 927
- US-B2- 7 062 363
- US-B2- 7 216 036
- US-B2- 8 056 863
- LAM Q M ET AL: "Precision Attitude Determination Using a Multiple Model Adaptive Estimation Scheme", AEROSPACE CONFERENCE, 2007 IEEE, IEEE, PISCATAWAY, NJ, USA, 3. März 2007 (2007-03-03), Seiten 1-20, XP031214257, ISBN: 978-1-4244-0524-4
- HODAY STEARNS ET AL: "Multiple model adaptive estimation of satellite attitude using MEMS gyros", 2011 AMERICAN CONTROL CONFERENCE (ACC 2011) : SAN FRANCISCO, CALIFORNIA, USA, 29 JUNE - 1 JULY 2011, IEEE, PISCATAWAY, NJ, 29. Juni 2011 (2011-06-29), Seiten 3490-3495, XP032035145, ISBN: 978-1-4577-0080-4
- QUANG LAM ET AL: "Noise estimation for star tracker calibration and enhanced precision attitude determination", INFORMATION FUSION, 2002. PROCEEDINGS OF THE FIFTH INTERNATIONAL CONFE RENCE ON JULY 8-11, 2002, PISCATAWAY, NJ, USA,IEEE, 8. Juli 2002 (2002-07-08), Seiten 235-242vol.1, XP032457277, DOI: 10.1109/ICIF.2002.1021156 ISBN: 978-0-9721844-1-0

## Beschreibung

Die Erfindung bezieht sich auf ein Lage- und Orbit-Steuersystem von Raumflugkörpern, insbesondere auf die Erfassung von kinematischen Messwerten durch mehrere Sensoren und ein Verfahren zu deren gemeinsamen Aufbereitung.

Ein gattungsgemäßes Lage- und Orbit-Steuersystem (attitude and orbit control system, AOCS) von Raumflugkörpern, beispielsweise Satelliten besteht aus kinematischen AOCS-Sensoren, einer Software zur Bestimmung des kinematischen Zustandes (attitude and orbit determination AOD), einer Software zur gezielten Steuerung des Zustandes (attitude and orbit control AOC), sowie aus einer Reihe von AOCS-Aktuatoren zur Umsetzung der Steuerbefehle, siehe die US 6 285 927.

Traditionell ist die Hardware dieser AOCS-Elemente an einen Zentralrechner des Flugkörpers wie Satellitenrechner angeschlossen, auf dem die AOD und AOC Software läuft. In der US 2003/009248 A1 ist eine solche typische AOCS-Konfiguration angegeben. Der Satellitenrechner benutzt die kinematischen und dynamischen Zustandsgleichungen, um nach einem bestimmten Steuergesetz und unter Verwendung von Modellen der Sensoren und Aktuatoren den Satelliten zu kontrollieren.

Als kinematische Variable werden die Drehlage, die Drehgeschwindigkeit (auch Drehrate genannt), die Drehbeschleunigung, sowie die entsprechenden translatorischen Größen Ort, Geschwindigkeit und Beschleunigung verwendet. In die dynamischen Gleichungen gehen zusätzlich die Parameter Drehmoment, Trägheitsmoment, Kraft und Masse ein. Verwendete AOCS-Sensoren sind Sternsensoren, Sonnensensoren, Erdsensoren und Magnetometer für die Drehlage, Kreisel für die Drehrate, GNSS-Sensoren (global navigation satellite system GNSS) für den Ort, sowie Beschleunigungssensoren. GNSS-Sensoren können bei interferometrischer Auswertung ebenfalls zur Erfassung der Drehlage mit geringer Genauigkeit dienen.

Die synergetische Auswertung der Messwerte unterschiedlicher kinematischer AOCS-Sensoren ist aus "Optimal Estimation for the Satellite Attitude using Star Tracker Measurements", James Ting-Ho Lo, 1978 zur Datenverarbeitung in Lage- und Orbit-Steuersystemen bekannt. Beispielsweise werden die Daten von 3 bis 6 Kreiseln und zwei Sternsensoren für eine gemeinsame Lageschätzung benutzt. Dabei werden alle Messdaten in einen gemeinsamen Datenstrom zusammengeführt. Für die Verteilung der Datenströme zwischen mehreren Geräteeinheiten des Satelliten haben sich Datenbusse, vornehmlich nach dem MIL1553 Standard, durchgesetzt. So haben die GEOS Satelliten, siehe "GEOS-N Data Book: 11. Attitude Control", Boeing, February 2005, einen Datenbus gemäß MIL 1553, über den mehrere Sternsensoren und Kreisel an die Elektronikbox der Lagesteuerung angeschlossen sind.

Zunächst wurden Lösungen verwendet mit zentraler Auswertung der AOCS-Sensordaten im Satellitenrechner. Dies war unumgänglich und angemessen, da die geringe Leistungsfähigkeit der Sensoren nur bei gemeinsamer Auswertung mehrerer Sensoren mit ihrer geringen Datenrate zu brauchbaren Resultaten führte. Lösungsbeispiele für das Problem einer zu geringen Anzahl von mit einem Sternensensor erfassbarer Sterne sind beispielsweise in der US 6 108 594 A und US 2003/0009284 A1 angegeben. Dort ist eine zentrale Auswertung der Daten von zwei Sternsensoren im Satellitenrechner notwendig.

Mit dem Aufkommen kleiner leistungsfähiger DSP (digital signal processor) und ASIC (application specific integrated circuit) Verarbeitungseinheiten gab es den Übergang zur dezentralen Verarbeitung in den Sensoren selbst.

Heute beginnt eine gegenläufige Tendenz - weg von der Dezentralisierung. Die Ursache dafür liegt zum einen in der ökonomischen und energetischen Ineffektivität der autonomen Verarbeitung, da moderne Verarbeitungseinheiten mit ihrer Leistungsfähigkeit für einen einzelnen Sensor überdimensioniert sind. Des Weiteren werden bei dezentralen Systemen Synergien verschenkt, die durch die gemeinsame Auswertung komplementärer Sensoren nutzbar sind.

Bisher sind zwei Tendenzen beim Abbau der Autonomie der Sensoren zu beobachten: erstens der Weg zurück zur zentralen Auswertung im Satellitenrechner; und zweitens der Weg zur Integration mehrerer Sensortypen in einen einzigen hybriden Sensor.

Prominentes Beispiel für die erste Tendenz der Zentralisierung ist der Übergang von autonomen Sternsensoren zu Sternsensorköpfen, die nur aus einer Sternkamera bestehen und keine eigene Verarbeitungseinheit haben. Die Auswertung der Sterndaten erfolgt wieder im Satellitenrechner mit der dorthin portierten Sternsensorsoftware. Diese Entwicklung ist nicht problemlos. Der Sternsensor ist der komplexeste AOCS-Sensor und das über Jahrzehnte gewachsene Knowhow der Hersteller ist nicht einfach mit einer Softwareportierung an die Satellitenhersteller übertragbar. Darüber hinaus wird der standardmäßig zur Verbindung des Satellitenrechners mit den anderen AOCS-Elementen verwendete AOCS-Satellitenbus durch die Menge der unverarbeiteten Sternsensordaten überlastet. Das wird gegenwärtig umgangen durch den zusätzlichen Einsatz von Punkt-zu-Punkt-Datenverbindungen neben dem AOCS-Satellitenbus. Dies bringt allerdings erhöhte Masse und Störanfälligkeit mit sich.

In der US 7 216 036 B2 wird als Lösung der genannten Probleme der Zentralisierung die Integration von Sternsensor und Drehratenkreisel in einem Gerät verwendet. Die Sternkameradaten und Kreiseldaten werden gemäß dieser Erfindung in einem internen synchron integrierten Datenstrom an die Verarbeitungseinheit des Geräts (Flugrechner) geleitet. Dort werden sie gemeinsam verarbeitet und dabei komprimiert. Dies ermöglicht wieder die Datenübertragung über den standardmäßigen AOCS-Bus des Satelliten. Die komplett gemeinsame Verarbeitung von Kreiseldaten und Sternsensordaten löst aber nicht das Problem der Knowhow-Integration für Kreisel und Sternsensoren bei einem Gerätehersteller. Der Sternsensor wird nur als sekundärer Sensor verwendet und ist mit seiner besseren Performance nicht systembestimmend. Des Weiteren gibt es den Nachteil, dass das integrierte Gerät bezüglich Masse, Volumen und Wärmeabgabe für eine sonst übliche Anbringung an den sensiblen Hauptinstrumenten des Satelliten ungeeignet ist. Damit trägt diese Lösung nur für kleine Satelliten mit geringen Anforderungen.

Von den Befürwortern einer erneuten zentralen Verarbeitung im Satellitenrechner wird das Fehlen der nur im Zentralrechner des Satelliten verfügbaren Steuerinformation des AOC als verfahrenstechnischer Nachteil dezentraler Lösungen gesehen. Die Topologie der Verteilung und Zusammenfassung der Verarbeitungseinheiten muss auch die Möglichkeiten der Aufteilung der Verfahrensschritte berücksichtigen.
Als Gegenargument gegen eine erneute zentrale Durchführung von Messwertauswertung und Satellitensteuerung im Satellitenrechner wird an anderer Stelle die schwere Beherrschbarkeit der dafür notwendigen hochkomplexen Software angesehen.

In der US 8 056 863 B2 soll die Komplexität im Zentralrechner dadurch verringert werden, dass unifizierte Messwertauswertungen und Steuergesetze verwendet werden. Nachteilig bei dieser Lösung ist, dass nur einfache Verfahren verwendet werden können und dass es damit Einschränkungen für die Optimalität der Steuerung gibt. Des Weiteren müssen Messwertauswertung und Satellitensteuerung stark auf einander abgestimmt sein. Aus dem Dokument US 8 056 863 B2 ist daher beispielsweise eine Beschränkung auf geringe Datenraten vorgesehen. Das verschlechtert die Möglichkeiten einer wirklichen Unifizierung, wo Lösungen für eine breite Klasse von Satelliten einsetzbar sein müssen.

Praktisch alle AOD-Verfahren beruhen auf statistisch optimierten Schätzmethoden. Je nach Komplexität des verwendeten statistischen Modells werden die Verfahren eingeteilt in Verfahren der kleinsten Quadrate (least square root LSR), Verfahren nach dem Maximum-Likelihood(ML)-Prinzip und Bayessche Verfahren. Das statistische Modell beschreibt dabei die Erfassung der kinematischen AOCS-Messdaten und das Verhalten des Satelliten als zwei statistische Markow-Prozesse. Als optimal werden diejenigen zu schätzenden Parameter angenommen, für die die beobachteten Messwerte am wahrscheinlichsten sind. Da nur die am Messprozess beteiligten Parameter direkt beobachtet werden können, während das Systemverhalten indirekt abgeleitet wird, heißt ein solches Modell auch Modell mit verstecktem Markow-Prozess.

Bei den LSR-Verfahren sind keine statistischen Parameter der beiden Prozesse bekannt und es gehen alle zu minimierenden Fehler mit gleichem Gewicht in die Optimierung ein. Wenn unterschiedliche Fehlervarianzen bekannt sind, zum Beispiel für die drei Komponenten der zu bestimmenden Lage, werden die entsprechenden Fehler bei der Optimierung mit der inversen Varianz gewichtet. Dies führt zu einer Maximierung der Likelihood. Wenn die statistischen Parameter nicht als konstant modelliert werden, sondern selber statisch von anderen Parametern abhängen, ist der Bayessche Schätzer optimal. Dabei müssen die Parameterabhängigkeiten als bekannte a priori Wahrscheinlichkeiten berücksichtigt werden, oder zusätzliche Modelle des Zusammenhangs zwischen den Parametern und den Messwerten müssen eingeführt werden.

Da die Parameterabhängigkeiten meist unbekannt oder schwierig zu schätzen sind, kommen in der Praxis im AOCS nur LSR- und ML-Verfahren, aber keine Bayesschen Schätzer zum Einsatz.

Die AOD- und AOC-Prozesse laufen im Satelliten zyklisch ab, was eine Implementierung der Schätzverfahren als rekursive Filter, sogenannte Kalman-Filter (KF), nahelegt. Dabei wird die aktuell optimale Schätzung aus den Messwerten des jetzigen Zyklus und aus der im vorherigen Zyklus geschätzten Vorhersage bestimmt. Vereinfacht gesagt, es wird ein optimaler zeitveränderlicher Kompromiss zwischen Messung und Vorhersage gefunden.

Die KF-Verfahren haben sich in vielen Satellitenmissionen praktisch bewährt, wobei auch einige Nachteile bekannt sind. Der Artikel "Nonlinear attitude filtering methods", F. L. Markley et al, J, Al AA 2005 gibt eine Übersicht über Lösungsansätze zur Überwindung dieser Nachteile. Die Prozessgleichungen für die kinematischen und dynamischen Parameter der Satellitensteuerung sind nicht linear. Das Kalman-Filter setzt Linearität voraus. Darum wurde das erweiterte Kalman-Filter (extended Kalman filter EKF) entwickelt, bei dem die nichtlinearen Gleichungen linear angenähert werden. Neben Verbesserungen führte das EKF zu neuen Nachteilen in Bezug auf Konvergenz und Stabilität. Im Gegenzug wurde das UKF (unscented Kalman filter) entwickelt, siehe zum Beispiel die Veröffentlichung "Unscented kalman filtering for spacecraft attitude state and parameter estimation" M. C. VanDyke, J. L. Schwartz, and C. D. Hall, in Proceedings, no. AAS-0115, 2004, bei dem die Prozessgleichungen ohne Linearisierung angewendet werden. Die Gleichungen werden dabei auf eine nach dem Monte-Carlo-Prinzip ausgewürfelte Menge von Stützstellen der statistischen Parameter angewendet. Für diese Parameter muss dazu die statistische Verteilung bekannt sein. Meist wird eine Gaußverteilung angenommen. Nachteilig wirkt sich dabei die stark vergrößerte Menge von zu verarbeitenden Daten aus. Wenn die statistischen Verteilungsfunktionen unbekannt sind, was häufig der Fall ist bei AOCS-Anwendungen, müssen im sogenannten Partikelfilter noch weit mehr Stützstellen der Monte-Carlo-Methode verwendet werden. Dies schließt die praktische Anwendung von Partikelfiltern im AOCS nahezu vollständig aus.

Eine alternative Methode zur Verbesserung der KF-Verfahren ist ihre Kombination mit sogenannten Stapelschätzern (batch estimator). Dabei werden nicht nur die Mess- und Vorhersagewerte des aktuellen Zyklus benutzt, sondern ein ganzer "Stapel" von Zyklen geht in die Verarbeitung ein. Die bekannten Stapelverfahren führen eine Glättung der Ergebnisse der KF-Verfahren durch und sind diesen nachgeschaltet. In dem Artikel "Gyro Stellar Attitude Determination", Mehdi Ghezal et al., Proceedings of the 6 International ESA Conference on Guidance, Navigation and Control Systems, Loutraki, Greece, 17-20 October 2005 ist eine solche Glättung des KF-Ergebnisses über mehrere Zyklen beschrieben.

Eine besondere Herausforderung stellt die gemeinsame Filterung von Lagemesswerten des Sternsensors und Ratenmesswerten des Kreiselsensors dar. Diese beiden Sensoren bilden als wichtigste Messmittel den Kern des AOD-Systems. Beide Sensortypen haben stark unterschiedliche Eigenschaften, was potentiell zur gegenseitigen Stützung genutzt werden kann, aber auch gewisse Schwierigkeiten bei der Hybridisierung ihrer Daten mit sich bringt. Kreiselsensoren haben ein geringeres Rauschen, was eine genauere - aber nur relative - Lagemessung über kurze Zeitabschnitte ermöglicht. Ihr Problem sind die Drift und der Skalenfaktorfehler, die über längere Zeitabschnitte dominant werden. Sternsensoren rauschen etwas mehr und können über kürzere Zeiträume durch Blendungen ausfallen. Dafür liefern sie aber immer eine absolute Lagemessung und driften nicht. Der oben angegebene Artikel fasst die Ergebnisse bei der Strategie der synergetischen Fusion von Daten des Sternsensors und des Kreisels zusammen. Er kommt zu dem Schluss, dass bisher die Parameterwahl sehr spezifisch für die konkrete Mission zu erfolgen hat. Das ist in der Praxis sehr schwierig und mit hohem Zusatzaufwand verbunden. Neben der bereits erwähnten Stapelglättung werden in dem oben angegeben Artikel zwei weitere Lösungsmöglichkeiten für dieses Problem vorgeschlagen.

Die erste Lösung besteht in einer Einteilung der Satellitenmissionen oder Missionsphasen in zwei Kategorien: solche mit kurzzeitiger gemeinsamer Lageschätzung mit Daten von Sternsensor und Kreisel (z.B. während der Bildaufnahme durch das Hauptinstrument des Satelliten) und solche mit gutem Langzeitverhalten (z.B. geostationäre Satelliten oder Missionsphasen mit fester Ausrichtung auf die Sonne).

Für beide Kategorien erfolgt die Filterung der Sternsensordaten und Kreiselmessungen in einem gemeinsamen Kalman-Filter mit einer bestimmten Hybridisierungsfrequenz. In der Kurzzeitkategorie wird eine hohe Hybridisierungsfrequenz gewählt, während die Langzeitkategorie eine niedrige Frequenz erfordert. In der Kurzzeitkategorie ist der Sternsensor dominant und bestimmt die Genauigkeit der Lagemessung mit seinem Rauschen und insbesondere mit seinen niederfrequenten Fehlerkomponenten. Die Kreiselparameter spielen kaum eine Rolle und nur sehr kurze Ausfallzeiten des Sternsensors können mit Kreiseldaten überbrückt werden. Der Kreisel muss nicht wie bei der Langzeitkategorie von hoher Güte sein. Im Langzeitszenario bestimmt der teure Kreisel die Genauigkeit, die über lange Zeit ausreichend gut ist. Der Sternsensor ist nur zur gelegentlichen Driftkompensation des Kreisels da und seine niederfrequenten Fehlerkomponenten spielen keine Rolle.

Als zweite Lösung beinhaltet der Artikel ein zusätzliches Prüffilter (consider filter). Dabei werden solche Parameter in das Kalman-Filter aufgenommen, die eigentlich nicht ausreichend gut beobachtet und damit geschätzt werden können. Als Prüfparameter werden hier die drei Komponenten des Skalenfaktorfehlers benutzt. Normalerweise wird nur die Kreiseldrift im Kalman-Filter geschätzt. Die Schätzungen für den Skalenfaktor können nicht in den Systemgleichungen benutzt werden, sondern sie dienen nur zur künstlichen Verschlechterung des geschätzten Fehlers. Dadurch soll verhindert werden, dass die Kovarianz der Lage ungerechtfertigt als zu gut bewertet wird und das Filter durch falsche Gewichte eine Desorientierung des Satelliten herbeiführt.

In der US 7 216 036 B2 wird ebenfalls ein Verfahren entsprechend der Langzeitkategorie der Sternsensor-Kreisel-Hybridisierung. Hier wird die Strategie nicht für teure hochgenaue Kreisel angewendet, sondern für einfache Kreisel, deren Genauigkeit für bestimmte Kleinsatellitenmissionen ausreicht. Der Sternsensor wird hier nur verwendet, um die Kreiseldrift beim Erreichen der Grenze der geforderten Messgenauigkeit zu kompensieren. Ziel ist die möglichst seltene Zuschaltung des Sternsensors, um die beschränkten Energieressourcen solcher Satelliten zu schonen.

In der US 6,732,977 B1 wird ein Verfahren beschrieben, dass der Lösung eines weiteren Problems der Hybridisierung von Sternsensor- und Kreiseldaten dient. Da Kreisel und Sternsensor nicht mechanisch starr miteinander verbunden sind, sondern in der Regel an getrennten Orten auf dem Satelliten angebracht werden, muss das Schwanken der relativen Ausrichtung der beiden Sensoren zusätzlich für die Hybridisierung ausgeglichen werden. Von der Sonneneinstrahlung verursachte thermoelastische Effekte bilden die Hauptursache der mechanischen Verziehungen des Satelliten. Deshalb ändert sich die Fehlausrichtung bei geozentrisch blickenden Satelliten periodisch mit der Orbitfrequenz. Hierbei wird der dieser Effekt genutzt, um die Fehlausrichtung zwischen den beiden Sensoren durch eine Frequenzfilterung entsprechend der Orbitfrequenz zu ermitteln. Dabei ist die Fehlausrichtung zusätzlich in das Kalman-Filter integriert.

Der bisher dargestellte Stand der Technik benutzt die Hybridisierung der Daten unterschiedlicher AOCS-Sensoren, um die jeweiligen Nachteile verschiedener Sensortypen, wie die Drift bei Kreiseln oder das Rauschen bei Sternsensoren, mit dem jeweils anderen Typ auszugleichen. Eine Erhöhung der Messgenauigkeit über die Grenze des mit einzelnen Sensoren Erreichbaren wird dabei nicht angestrebt. Diese zusätzliche Aufgabe einer Sensorhybridisierung ist in der US 7 062 363 B2 offenbart.

Die Lagemessung in einem einzelnen Sternsensor basiert auf dem Vergleich von gemessenen Sternpositionen mit den Positionen aus einem Sternkatalog. Die Katalogpositionen sind in einem inertialen Koordinatensystem gegeben. Die Messung erfolgt in dem mit dem Sensor verbundenen Koordinatensystem. Für die Lagebestimmung wird die optimale Transformation aller Sternpositionen aus dem inertialen System in das Sensorsystem geschätzt. Je mehr Sterne zur Verfügung stehen, in der Regel sind es etwa 16, umso mehr Optimierungsgleichungen können für den Positionsvergleich benutzt werden. Die Genauigkeit der Lagemessung steigt mit der Zahl der benutzten Gleichungen. Die US 7 062 363 B2 basiert auf einer Erhöhung der Anzahl der verfügbaren Gleichungen dadurch, dass die Lageschätzung nicht als optimale Transformation aus dem inertiale System in das Sensorsystem bestimmt wird, sondern als Transformation aus dem inertialen System in das Koordinatensystem des Satellitenkörpers. Dazu werden zunächst die von einem oder mehreren Sternsensoren gemessenen Sternpositionen in das Satellitensystem transformiert. Zusätzlich werden die Sternpositionen mit Hilfe der Messwerte eines Kreiselratensensors in Satellitenkoordinaten vorhergesagt. Entsprechend der erhöhten Anzahl der in allen verfügbaren Sternsensoren vorhandenen Sterne und der mit dem Ratensensor vorhergesagten Sterne ergibt sich eine höhere Anzahl von Optimierungsgleichungen und somit eine Genauigkeitsverfeinerung.

Die Hybridisierung nach dem in der US 7 062 363 B2offenbarten Verfahren hat für die Fusion der Daten von zwei Sternsensoren eine bessere Wirkung als für die Fusion der Sternsensordaten mit den Daten des Ratensensors. Mit mehreren Sternsensoren bestimmte Sternpositionen sind statistisch unabhängige Messungen, so dass die Messgenauigkeit mit der Wurzel der Sternanzahl steigt. Die mit dem Ratensensor vorhergesagten Sternpositionen basieren nicht nur auf der Messung des Ratensensors, sondern auch auf vorherigen Messungen der Sternsensoren. Damit sind sie nicht statistisch unabhängig und bringen eine geringe Verbesserung der Genauigkeit.
Eine Hybridisierung von Lagedaten und Ratendaten mit dem Ziel der Genauigkeitsverbesserung ist Gegenstand des Artikels "Noise Estimation for Star Tracker Calibration and Enhanced Precision Attitude Determination", Quang Lam, Craig Woodruff, and Sanford Ashton David Martin, in ISF 2002. Der Basisalgorithmus ist hier das übliche 6-dimensionale EKF mit den drei Lageschätzfehlern und den drei Ratendriftschätzfehlern als Prozessparameter. Eine über das EKF hinausgehende Hybridisierung ist nicht vorgesehen. Die Genauigkeitsverbesserung soll erreicht werden, indem die Messfehler auf den Anteil des weißen Rauschens reduziert werden. Sowohl die Messung im Sternsensor als auch die im Kreiselsensor haben neben dem weißen Rauschen auch wesentliche andere, korrelierte Fehlerkomponenten. Weißes Rauschen ist eine entscheidende Voraussetzung für die Anwendbarkeit des EKF. Andere Rauschkomponenten degradieren das Filterergebnis. Das im Artikel "Noise Estimation for Star Tracker Calibration and Enhanced Precision Attitude Determination", Quang Lam, Craig Woodruff, and Sanford Ashton David Martin, in ISF 2002 beschriebene Verfahren betreibt die Erkennung und Eliminierung der nicht-weißen Rauschkomponenten von Lage- und Ratensensor vor der eigentlichen Filterung.

Die Lagemessfehler von Sternsensoren und von integrierenden Ratensensoren enthalten neben dem weißen Rauschen (noise equivalent angle NEA) korrelierte Fehler mit hoher (HF) oder niedriger (LF) Frequenz. Bei den Sternsensoren werden die HF-Fehler durch räumlich hochfrequentes Rauschen (high spatial frequency error HSFE) verursacht. Die LF-Fehler dagegen werden durch niederfrequentes räumliches Rauschen (low spatial frequency error LSFE) bedingt. Bei integrierenden Ratensensoren dominieren niederfrequente Fehlerkomponenten, die durch den integrierten Winkelfehler (angle random walk ARW) und die Biasinstabilität (BI) charakterisiert werden.

Das Verfahren laut Artikel "Noise Estimation for Star Tracker Calibration and Enhanced Precision Attitude Determination", Quang Lam, Craig Woodruff, and Sanford Ashton David Martin, in ISF 2002 beinhaltet in einem Identifizierungsschritt die Erkennung der nichtweißem Rauschkomponenten beider Sensoren und in einem weiteren zweiteiligen Auslöschschritt ihre Eliminierung aus dem Messwerten und aus den im EKF benutzten Kovarianz-Matrizen. Das Erkennen der nicht-weißen Fehlerkomponenten wird für beide Sensortypen unabhängig voneinander durchgeführt. Die Identifizierung ist nicht Bestandteil der in Echtzeit laufenden statistischen Schätzung in der Sensordatenverarbeitung des Satelliten. Die Identifizierung erfolgt durch eine aufwendige Nachbearbeitung von an den Boden übertragenen rohen Sensordaten mittels Frequenzfilterung. Das Identifizierungsergebnis ist ein numerisches Model (Polynom 10-ter Ordnung) für die nicht-weißen (farbigen) Rauschkomponenten. Nur dieses Modell wird bei der Datenverarbeitung an Bord benutzt.

Das in "Noise Estimation for Star Tracker Calibration and Enhanced Precision Attitude Determination", Quang Lam, Craig Woodruff, and Sanford Ashton David Martin, in ISF 2002 beschriebene Verfahren ist mit gravierenden Nachteilen behaftet. Ein Nachteil ist die angenommene dauernde Gültigkeit der numerischen farbigen Fehlermodelle. Davon kann in der Praxis nicht ausgegangen werden, so dass laufend Nachkalibrierungen unter Einbeziehung des Bodensegmentes des Satelliten nötig sind. Neben dem zeitlichen Verfall der Gültigkeit des Modells des Sternsensors ist das verwendete Sternsensormodell durch weitere unerwünschte Randbedingungen belastet. In der Veröffentlichung wird gefordert, dass der Sternsensor so auf dem Satelliten angebracht wird, dass die Sterne diagonal durch das Bildfeld wandern. Das ist eine im breiten Einsatz des Sternsensors nicht einhaltbare Forderung an die Auslegung des Satelliten und der Mission. Das zugrunde liegende Problem bei Sternsensoren ist, dass der Messfehler entsprechend der bildhaften Auswertung von Raumfrequenzen abhängt, in der nachfolgenden Filterung und Steuerung aber Zeitfrequenzen verwendet werden. Die Umwandlung der Raumfrequenzen in Zeitfrequenzen hängt von zeitveränderlichen Parametern - wie Drehrate und Drehrichtung - ab. Deshalb ist ein unter allen Einsatzbedingungen gültiges Zeitmodel der Fehler eines Sternsensors prinzipiell nicht möglich.

Eine letzte Gruppe relevanter Modifikationen des EKF-Verfahrens sind die adaptiven Kalman-Filter (adaptive extended Kalman filter AEKF), die auf einer Mehrmodellschätzung beruhen (multiple model adaptive estimation MMAE). Dieses Verfahrensderivat zielt auf eine bessere Behandlung des zweiten versteckten Markow-Prozesses, der sich nur indirekt in den Messungen widerspiegelt. Der versteckte Markow-Prozess des Systemverhaltens wird zum einen durch die Steuerkommandos des AOC-Systems bestimmt. Diese Kommandos könnten unter Umständen vom AOC an das AOD explizit geliefert werden. Im Kalman-Filter des AOD könnten somit die Steuerkommandos als bekannte Größen behandelt werden. Beispielsweise kann das AOC dem AOD vorab mitteilen, dass zu einem bestimmten Zeitpunkt ein Manöver mit einer bestimmten Drehrate beginnt. Andere Parameter des versteckten Markow-Prozesses müssen ausschließlich statistisch behandelt werden. Zum Beispiel muss das EKF auf einen Defekt oder eine deutliche Degradation eines der Sensoren so reagieren, dass keine katastrophalen Folgen für die Satellitensteuerung eintreten. Für dieses Beispiel der Fehlerresistenz würde das EKF parallel mit mehreren Modellen von Fehlern in der Sensorik laufen. Ein weiteres Beispiel für die gleichzeitige Verwendung mehrerer Modelle ist die Berücksichtigung von Schwankungen der Betriebsspannung. Diese Schwankungen beeinflussen die Sensormessfehler, können aber nicht alle messtechnisch erfasst werden. Hier könnte eine Modellbank für anzunehmende Spannungsschwankungsbereiche im Kalman-Filter Anwendung finden.

Die MMAE-Schätzung liefert - zusätzlich zur üblichen rekursiven Schätzung der Systemparameter und ihrer Fehler durch das EKF - für jedes der Modelle die Wahrscheinlichkeit, mit der es im aktuellen Zeitpunkt gültig ist. Die Schätzung benutzt wie das EKF rekursiv nur die aktuellen Messwerte.
Beim Vorliegen von a priori Wahrscheinlichkeiten für das Auftreten bestimmter Modellvarianten können diese in die Bestimmung der Gültigkeitswahrscheinlichkeit der Modellvarianten einbezogen werden. Als Endergebnis kann entweder die Schätzung desjenigen EKF mit der höchsten Gültigkeitswahrscheinlichkeit des Modells oder eine gewichtete Summe benutzt werden.

Die Veröffentlichung "Precision Attitude Determination Using a Multiple Model Adaptive Estimation Scheme", Quang M. Lam, John L. Crassidis, in IEEE AC 2007 benutzt die MMAE-Technik und zielt auf eine synergetische Genauigkeitsverbesserung bei der Hybridisierung der Daten von mehreren Sternsensoren und einem Ratenkreiseln mittlerer Güte für den Einsatz in hochagilen Satelliten. Dabei sollen Lagegenauigkeiten erreicht werden, die um Größenordnungen höher sind als die Sternsensorgenauigkeit. Es wird gezeigt, dass in Missionsphasen mit hohen Raten das traditionell für die Sternsensor-Kreisel-Hybridisierung verwendete 6-dimensionale EKF sehr große Fehler produziert. Die Ursache wird im Fehlen der Berücksichtigung des Kreiselskalenfaktorfehlers und der Kreiselachsenfehlausrichtung gesehen. Diese Parameter sind bei hohen Raten unbedingt mit zu berücksichtigen. Die zu überwindende Schwierigkeit bestehe darin, dass Skalenfehler und Driftfehler des Kreisels keine unabhängigen statistischen Größen sind.

Als Lösung wird eine Multimodellfilterung angegeben. Parallel laufen mehrere EKF-Schätzungen mit unterschiedlichen Modellen. Die Modelle unterscheiden sich zum einen durch die Dimension des Vektors der Systemparameter. Neben den genannten 6 Parametern werden 3 Parameter für den Skalenfaktorfehler und 6 Parameter für die Kreiselachsenfehlausrichtung eingeführt. Es werden verschiedene 6-, 9- und 15-dimensionale EKF-Schätzungen parallel realisiert. Zum zweiten benutzt man verschiedene Modelle für unterschiedliche Modi, in denen sich die Sternsensoren befinden können. Ein Modus wird z.B. definiert durch die Sterndichte in Blickrichtung des Sensors, durch die unterschiedlichen Drehraten des Satelliten, durch die mehr oder weniger günstige Ausrichtung des Sternsensors zu der Satellitendrehachse. Für die Modi werden bekannte a priori Wahrscheinlichkeiten angenommen. Als Gesamtschätzung gilt die gewichtete Summe aller parallel laufenden EKF-Schätzungen, wobei als Gewichte die a priori Wahrscheinlichkeiten der Modi und die reziproken Kovarianzen der unterschiedlich dimensionierten Systemmodelle verwendet werden.
Für eine praktische Anwendung des in dem zuvor beschriebenen Verfahrens wären erhebliche Kenntnisse zu verschieden Modi und ihrer Wahrscheinlichkeiten nötig, die im allgemeinen nicht vorliegen werden. Außerdem ist mit dem beschriebenen Ansatz keine Dekorrelation von Kreiseldriftfehler und Kreiselskalenfaktorfehler möglich.

Der Artikel "Multiple Model Adaptive Estimation of Satellite Attitude using MEMS Gyros", Hoday Stearns, Masayoshi Tomizuka, American Control Conference, 2011 adressiert ebenfalls das Problem der verbesserten Schätzung der Lage aus den Daten von Kreiseln mittlerer Güte mittels EKF-Schätzung. Die beiden Hauptparameter ARW-Winkelrauschen und BI-Drift können für Kreisel dieser Güte nicht als konstant angenommen werden, sondern müssen laufend neu geschätzt werden. Als Ursache für die Veränderung dieser Kreiselparameter wird ihre starke Abhängigkeit von zusätzlichen Systemparametern - zum Beispiel Temperatur oder Betriebsspannung - angesehen. Diese Systemparameter sind nicht bekannt, sondern müssten ebenfalls geschätzt werden. Als Lösung wird ein MMAE-Schema mit einer Modelbank von 49 verschiedenen Modellen angegeben. Dazu wird das ARW- und BI-Rauschen in jeweils 7 verschiedene, typische Rauschstärkenklassen unterteilt. In der Kombination ergeben sich daraus die 49 parallel laufenden EKF-Schätzprozesse, die mit den parallel geschätzten Gültigkeitswahrscheinlichkeiten der Rausstärkenklassen gewichtet zusammengefasst werden. Das Problem der Fehlerkorrelation in allen verwendeten Rauschstärkenklassen wird hier nicht gelöst.

Aufgabe der Erfindung ist es, die beschriebenen Nachteile der bisher benutzten Architekturen und Verfahren zur Hybridisierung von Daten verschiedener AOCS-Sensoren zu überwinden.

Die Aufgabe wird durch den Gegenstand des Anspruchs 1 und die Merkmale gemäß dem Verfahrensanspruch 9 gelöst. Die von diesen abhängigen Ansprüche geben vorteilhafte Ausführungsformen des Gegenstands des Anspruchs 1 beziehungsweise des Verfahrens gemäß Anspruch 9 wieder. Das Verfahren gemäß Anspruch 9 ist insbesondere zur Durchführung in dem Gegenstand des Anspruchs 1 vorgesehen. Unter Raumflugkörper sind beispielsweise Satelliten, bemannte und unbemannte Raumschiffe, Raumstationen, Raumgleiter, erdfern fliegende Fluggeräte und dergleichen zu verstehen.

Insbesondere soll eine Topologie der Elemente des Lage- und Orbit-Steuersystems (attitude and orbit control system, AOCS) verwendet werden, die einen AOCS-Bus des Raumflugkörpers, beispielsweise eines Satelliten nicht überlastet, die eine Anbringung von Sternsensoren mit geringer Masse und Wärmeabgabe an sensiblen Stellen ermöglicht und/oder die für alle gängigen Satellitenmissionen gleichermaßen anwendbar ist. Dabei soll ein Verfahren zur Hybridisierung der Messwerte unterschiedlicher Sensoren des Lage- und Orbitsystems (AOCS-Sensoren) zum Einsatz kommen, das nicht auf geringe Leistungsanforderungen beschränkt ist, das keine Abhängigkeit von am Boden auszuführenden Prozessschritten besitzt, das dem EKF wirklich weitgehend dekorrelierte Eingangsdaten bereitstellt, das keine festen statistischer Parameter verwendet, sondern diese online schätzt und/oder das eine automatisch funktionierende Schnittstelle zur Manöversteuerung des Raumflugkörpers besitzt ohne Dynamikparameter des Raumflugkörpers zu verwenden.

Das topologische Grundprinzip besteht beispielsweise darin, dass weder eine Integration verschiedener Sensoren, noch eine zentrale Messung und Steuerung im Zentralrechner des Raumflugkörpers erfolgt. Anstelle von Integration oder Zentralisation wird eine zweigeteilte Vernetzung verwendet, die das bisherige AOCS-Netzwerk in Form eines zweiten Busses wie AOCS-Bus in ein AOD- und ein AOC-Netzwerk aufteilt. Die Vernetzung betrifft nicht nur den Austausch von Daten über das Netz, sondern auch die vernetzte Datenauswertung. Allein das AOC-Netzwerk zur Steuerung des Raumflugkörpers verbleibt dabei beim Zentralrechner des Raumflugkörpers, wogegen die Erfassung und Hybridisierung der Messwerte in dem zweiten AOD-Netzwerk mit allen kinematischen Sensoren und einer zentralen Sensordatenaufbereitung erfolgt.

Vorzugsweise wird die zentrale Prozessoreinheit zur Messwerthybridisierung dem Sternsensor zugeordnet. Diese Wahl der Netzzentrale ist optimal, weil der Sternsensor die komplexesten internen Algorithmen erfordert und damit gute Voraussetzungen für das Verständnis der anderen Sensoren verfügbar sind; weil allein der Sternsensor vollständig autonom arbeiten kann; weil allein der Sternsensor absolute Lagedaten der erforderlichen Genauigkeit liefern kann; weil allein der Sternsensor als Zentrale die Möglichkeit für ein "Einzelsensor-" und "kreiselloses" System der Lageerfassung liefert; weil allein der Sternsensor ein reines Raumfahrtprodukt ist und nicht wie Kreisel durch andere Märkte dominiert wird; und weil nur das Messverfahren des Sternsensors beim Vergleich mit dem Sternkatalog neben der Lage auch die Lagemessfehler direkt bestimmen kann.

Aus Gründen der Zuverlässigkeit wird neben der als Master nominierten zentralen Prozessoreinheit eine zweite zentrale redundante Prozessoreinheit vorgehalten. Dazu wird die Prozessoreinheit eines weiteren AOCS-Sensors verwendet, die der Prozessoreinheit des Sternsensors gleichwertig ist.

Das Prinzip der Sensorvernetzung erfordert kein Knowhowtransfer zwischen unterschiedlichen Sensorentwicklern, sondern es beruht auf der Systemcharakterisierung verschiedener Sensortypen, ohne ihre Interna zu tangieren.

Das Prinzip der Sensorvernetzung ermöglicht gleichzeitig die Unifizierung des AOD-Systems ohne Einschränkungen. Anzahl und Güte erforderlicher Sensoren, sowie die geeigneten Randbedingungen für die Datenhybridisierung können im Rahmen einer einheitlichen Lösung frei gewählt werden und erfordern lediglich entsprechende Konfigurationsanpassungen für die konkrete Realisierung.

Die Beschränkung des Sensornetzes auf rein kinematische Daten ist für das Zusammenwirken mit der Orbit- und Lagesteuerung optimal. Die dynamischen Parameter, die für jeden Satelliten und jede Mission spezifisch sind, gehen nicht in die Hybridisierung ein. Das dynamische Verhalten des Satelliten, in dem Maße wie es für die Hybridisierung kinematischer Messdaten erforderlich ist, kann aus vorklassifizierten Manöverparametern und aus den Messwerten abgeleitet werden.

Das wesentliche Grundprinzip des optimalen Verfahrens zur Hybridisierung der Messwerte besteht darin, dass dem standardmäßigen EKF-Verfahren des AOD-Systems weitestgehend unkorrelierte, hybride Messwerte als Input bereitgestellt werden. Die Dekorrelation ist nur in der vernetzten Sensorkonfiguration möglich und nutzt alle komplementären Sensoreigenschaften vollständig aus. Dabei bietet das Verfahren den Vorteil der kompletten Autonomie in Bezug auf Daten vom AOC-System und von bodengebunden Datenauswertungen. Die Koppelung zum AOC erfolgt allein durch eine Konfiguration von Missionsmanöverparametern.

Im Folgenden wird die Erfindung anhand der Figuren 1 bis 11 näher erläutert. Hierbei zeigen:
- Figur 1: ein Blockdiagramm der Topologie des hybriden Netzes kinematischer AOCS-Sensoren nach dem Grundprinzip der Erfindung,
- Figur 2: ein Blockdiagramm der Topologie des hybriden Netzes kinematischer AOCS-Sensoren nach dem Grundprinzip der Erfindung, wobei der zentrale Zeittakt vom Satellitenrechner bereitgestellt wird,
- Figur 3: ein Blockdiagramm der Topologie des hybriden Netzes kinematischer AOCS-Sensoren mit einem Kreiseldrehratensensor und einem Erdsensor als weitere kinematischer AOCS-Sensoren, wobei die Prozessoreinheit des Kreiseldrehratensensors als zentrale Master-Prozessoreinheit nominiert ist und die Prozessoreinheit des Sternsensors die Rolle der zentralen redundanten Prozessoreinheit spielt,
- Figur 4: ein Blockdiagramm der Topologie des hybriden Netzes kinematischer AOCS-Sensoren mit abgesetzten Kameraköpfen des Sternsensors,
- Figur 5: ein Blockdiagramm der Topologie des hybriden Netzes kinematischer AOCS-Sensoren, wobei die Prozessoreinheit des GNSS-Sensors als zentrale redundante Prozessoreinheit nominiert ist und der Kreiselratensensor als Notfallsensor auch direkt an den AOCS-Bus angeschlossen ist,
- Figur 6: ein Blockdiagramm des generellen, optimierten Verfahrens zur Hybridisierung kinematischer Messdaten von AOCS-Sensoren,
- Figur 7: ein Blockdiagramm des Verfahrens zur Hybridisierung kinematischer Messdaten von Sternsensoren und einem Kreiseldrehratensensor,
- Figur 8: eine Illustration der spektralen Fehlerenergiedichte von Sternsensorlage, Kreisellage und hybridisierter Lage,
- Figur 9: eine Illustration zur Verdeutlichung der Wirkungsweise der Reduktion der Fehler und der Fehlerkorrelation durch MLE-Fitting,
- Figur 10: eine Illustration zur Verdeutlichung der Vorgehensweise bei der Trennung von BI-Fehler und SF-Fehler,
- Figur 11: eine Illustration zur Verdeutlichung der Vorgehensweise bei der Identifikation des Trends der Fehlausrichtung.

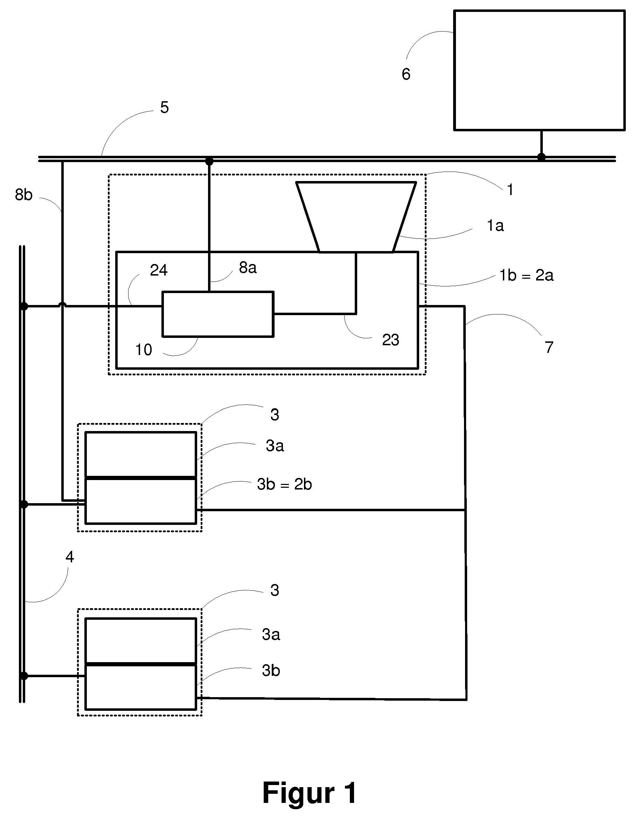

Die Figur 1 zeigt die vorzugweise verwendete Anordnung der kinematischen AOCS-Sensoren im Sensornetzwerk und die Anbindung an das AOCS des Raumflugkörpers, beispielsweise eines Satelliten.

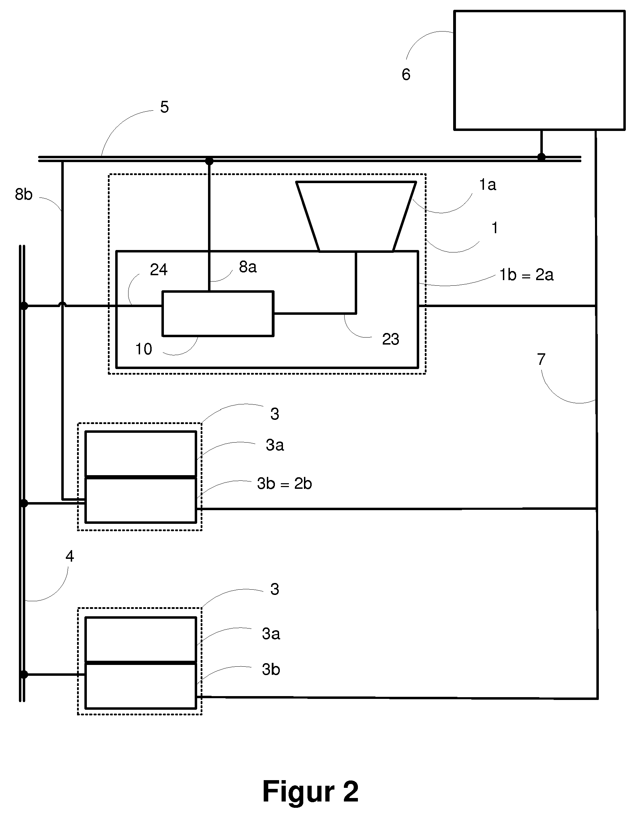

Der aus Kamerakopf 1a und Prozessoreinheit 1b bestehende Sternsensor 1 ist über den ersten Bus wie Sensor-Bus 4 mit weiteren Sensoren 3 anderen Typs verbunden. Die Prozessoreinheit 1b des Sternsensors übernimmt als zentrale Master- Prozessoreinheit 2a neben der sternsensorspezifischen Datenprozessierung auch die Aufgabe des optimierten Hybridisierungsprozessors 10. Aus Zuverlässigkeitsgründen ist eine zweite, gleichwertige Prozessoreinheit 3b eines der anderen Sensoren 3 wie AOCS-Sensoren als zentrale redundante Prozessoreinheit 2b nominiert. Sie übernimmt bei Ausfall der zentralen Master-Prozessoreinheit 2a deren Funktion und ist ebenfalls mit dem zweiten Bus wie AOCS-Bus 5 verbunden. Sie liefert im Redundanzfall die optimal hybridisierten kinematischen Messdaten 8b. Die anderen Sensoren können auch über Verarbeitungseinheiten verfügen, die aber keine Aufgaben für mehrere Sensoren bearbeiten. Alle Sensoren liefern dem optimierten Hybridisierungsprozessor 10 ihre synchronisierten Messdaten. Die Synchronisierung kann dergestalt erfolgen, dass alle Sensoren zum gleichen Zeitpunkt messen, oder dass die Messdaten einen Zeitstempel bezogen auf einen einheitlichen Zeittakt enthalten. Die Synchronisierung erfolgt auf Basis des über die Synchronisierungsleitung 7 von der zentralen Prozessoreinheit 2 bereitgestellten Zeittakts. Der Zeittakt für die Sensoren kann von der zentralen Prozessoreinheit 2 selbst generiert werden, oder ein vom AOCS des Raumflugkörpers, beispielsweise eines Satelliten bereitgestellter Takt kann weitergeleitet werden. Die Anordnung für den Fall der Bereitstellung des Taktes durch den Zentralrechner des Raumflugkörpers wie Satellitenrechner ist in Figur 2 dargestellt. Bei der Übernahme des Zeittaktes vom Raumflugkörper müssen die optimal hybridisierten kinematischen Messdaten 8 keinen mit dem Raumflugkörper geeichten Zeitstempel enthalten, wie es im Fall der lokalen Zeittaktung innerhalb des AOD-Netzes nötig ist. Die synchronen Lagenmessdaten und die dazugehörige Lagekovarianz werden im Sternsensor 1 selbst aus den Bilddaten des Kamerakopfes 1a bestimmt und gehen ebenfalls in die Hybridisierung ein. Die optimal hybridisierten kinematischen Messdaten 8 werden über den AOSC-Bus des Raumflugkörpers an den Zentralrechner 6 übertragen, wo sie für die Steuerung des Raumflugkörpers verwendet werden.

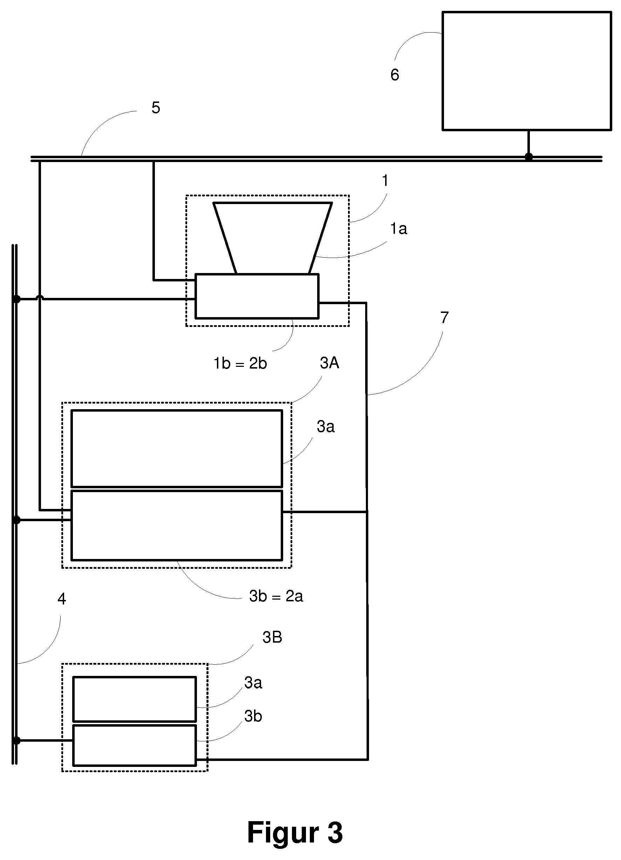

Unter Umständen ist es günstiger, wenn die Rolle der zentralen Master-Verarbeitungseinheit 2a von der Verarbeitungseinheit des Kreiselsensors 3A übernommen wird, wie in Figur 3 abgebildet. Ein Grund für die Wahl dieser Konfiguration kann darin bestehen, dass ein üblicherweise bereits verwendeter Kreisel hoher Güte mit einer sehr leistungsfähigen Verarbeitungseinheit und sehr hohen Datenraten in das Sensornetzwerk integriert werden soll. In dem Fall kann es günstiger sein, den im Kreisel vorhandenen Prozessor zuerst für die zentralen Aufgaben zu nutzen, und den Sensor-Bus 4 von den hohen Datenraten des Kreisels zu entlasten. Bei dieser Variante ist die Verarbeitungseinheit des Kreisels nominell mit dem Zentralrechner 6 über den AOCS-Bus 5 verbunden und von ihr wird auch den anderen Sensoren über die Synchronisierungsleitung 7 der einheitliche Takt zur Verfügung gestellt. Die Verarbeitungseinheit 1b des Sternsensors ist hier auf die Rolle der zentralen redundanten Prozessoreinheit 2b beschränkt.

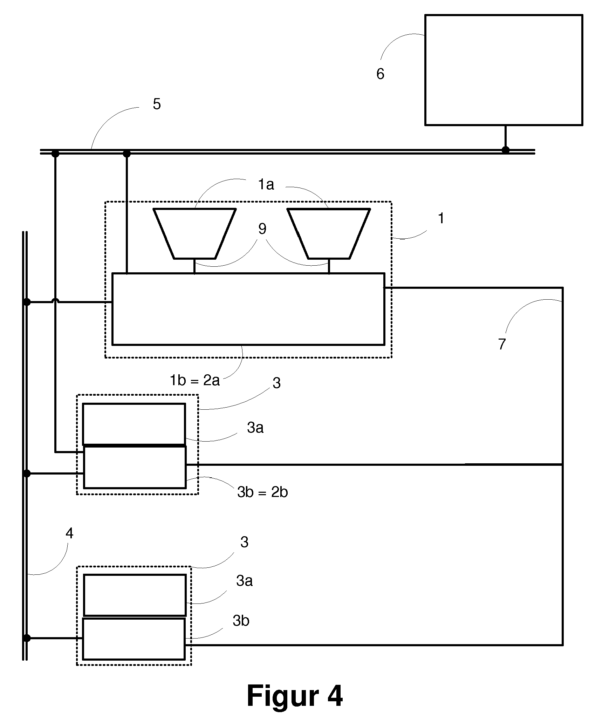

Für Beobachtungsmissionen im erdnahen Orbit werden häufig zwei Sternsensorkameraköpfe 1a verwendet. Die entsprechende Variante des Sensornetzes ist in Figur 4 dargestellt. In Figur 4 benutzen beide Sternsensorköpfe 1a die gleiche Verarbeitungseinheit 1 b und sind von dieser je über eine Punkt-zu-Punkt-Datenverbindung 9 abgesetzt. Diese Konfiguration ist günstig, wenn ein Kamerakopf direkt am Hauptinstrument des Raumflugkörpers angebracht werden soll. Dadurch kann die Ausrichtung des Hauptinstruments direkt gemessen werden. Der Kamerakopf ohne Verarbeitungseinheit stört das Hauptinstrument wenig durch seine geringe Masse und thermische Energieabgabe. Es sind auch, hier nicht dargestellt, Varianten mit drei und mehr Kameraköpfen einsetzbar. Des Weiteren kann auch nur ein Kamerakopf von der Verarbeitungseinheit des Sternsensors abgesetzt sein, wogegen der zweite mit der Verarbeitungseinheit ein integriertes Gerät bildet.

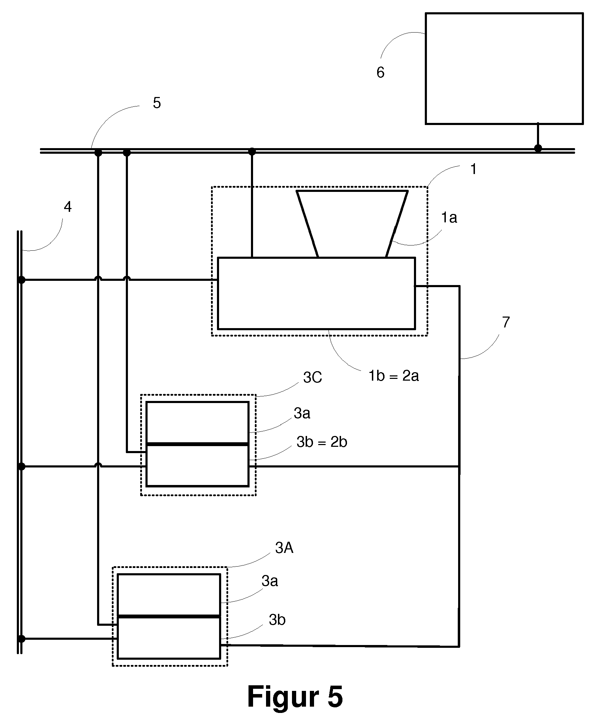

Es ist denkbar, dass das AOCS einzelne Sensoren nicht nur für die nominale Lage- und Orbit-Steuerung benutzt, sondern auch für weitere Aufgaben. Dann kann, wie in Figur 5 dargestellt, eine zusätzliche Verbindung dieses mehrfach benutzten Sensors zum AOCS-Bus eingerichtet werden. In Figur 5 wird zum Beispiel die Prozessoreinheit 3b des GNSS-Sensors 3C als zentraler redundanter Prozessor benutzt, wogegen der Kreiselsensor 3A zusätzlich als Notfallsensor des Raumflugkörpers dient. Er ist deshalb zusätzlich zu den zentralen Verarbeitungseinheiten 2a und 2b des Sensornetzes an den AOCS-Bus angeschlossen. In gleicher Wiese können auch andere Sensoren mit einer zusätzlichen Verbindung zum Satellitenrechner ausgestattet sein, um für Notfälle oder andere Einsatzfälle außerhalb des nominalen AOD bereitzustehen. Die Zusätzliche Verbindung des betroffenen Sensors muss dabei nicht über den AOCS-Bus erfolgen, sondern sie kann auch auf andere Art realisiert sein, etwa als Punkt-zu-Punkt-Verbindung.

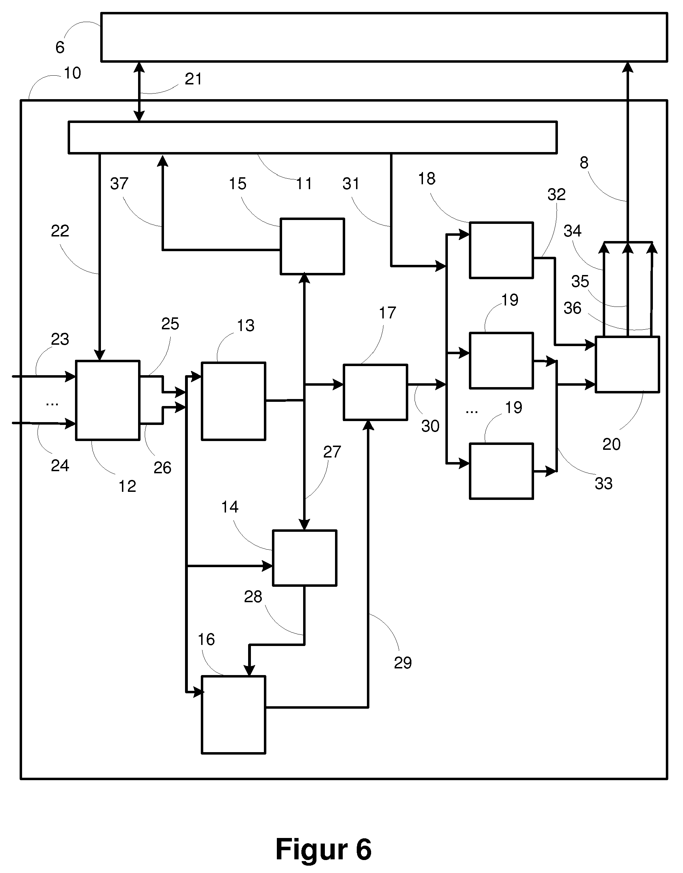

Figur 6 zeigt das generelle Blockdiagramm des Verfahrens, das durch den optimierten Hybridisierungsprozessor 10 auf der Hardware der zentralen Verarbeitungseinheit 2 realisiert wird.
Die Lagemess- und Lagekovarianzdaten 23 vom Sternsensor und die Messdaten 24 weiterer kinematischer AOCS-Sensoren 3 sind mit Hilfe des über die Synchronisierungsleitung 7 bereitgestellten Zeittaktes synchronisiert, also auf einen gemeinsamen Messzeitpunkt beziehbar. Um die Daten unterschiedlicher Sensoren vergleichen und kombinieren zu können, müssen sie in ein einheitliches als Referenz genutztes Koordinatensystem transformiert werden. Dies passiert in dem Transformationsprozessor 12. Die Referenz ist im Prinzip frei wählbar. Wenn eine weitere Transformation vermieden werden soll, kann beispielsweise das vom Zentralrechner geforderte System - meist die Koordinaten des Raumflugkörpers wie Satellitenkoordinaten - verwendet werden. Bei der Verwendung von Kreiselsensoren mit unterschiedlichen Parametern der einzelnen Achsenkreisel kann die Verwendung des Kreiselkoordinatensystems als Referenz vereinfachend auf die Prozessierung wirken.

Als Transformationsparameter 22 werden die Drehungen der einzelnen Sensoren zum Referenzsystem verwendet. Diese können als Eulerwinkel, Quaternionen oder Drehmatrizen dargestellt werden. Die Anfangswerte der Transformationsparameter werden bei der Sensorfertigung und Integration dieser in den Raumflugkörper gemessen und sind im Konfigurationsparameterspeicher 11 verfügbar. Durch thermoelastische Verformung der mechanischen Struktur des Raumflugkörpers kann sich die Ausrichtung der Sensoren langsam ändern, was durch aktualisierte Transformationsparameter 37 ausgeglichen wird, wobei die Aktualisierung Bestandteil des Verfahrens ist.

Alle Messwerte im einheitlichen Referenzsystem, die Lagemess- und Lagekovarianzdaten 25 des Sternsensors und die Daten 26 der weiteren kinematischer Sensoren, werden einer Reduktion 13 der Fehler und der Fehlerkorrelation unterzogen. Die Reduktion ist möglich wegen der unterschiedlichen Fehlerzusammensetzung bei unterschiedlichen Sensortypen. Dabei werden die Messwertkomponenten mit den geringsten Fehlern und der geringsten Fehlerkorrelation von dem für ein bestimmtes Signalspektrum günstigsten Sensor übernommen, wogegen die entsprechenden Signalkomponenten der andern Sensoren ausgelöscht werden. Diese Vorgehensweise benutzt keine festen Sensormodelle, etwa in Form von Polynomen, sondern schätzt die Parameter aktuell nur auf der Basis der physikalischen Grundprinzipien der Sensoren und der Messwerte.

Die unterschiedlichen Eigenschaften der Sensoren können nicht nur zur Messwertverbesserung im Sinne der Reduktion 13 der Fehler und der Fehlerkorrelation, sondern auch für eine gegenseitige Stützung der sensorinternen Kalibrierparameter 14 genutzt werden. Im Nominalfall ist diese Kreuzkalibrierung nicht nötig, da die Reduktion 13 der Fehler und der Fehlerkorrelation implizit etwaige Fehler in den Kalibrierparameter ausgleicht. Im nichtnominalen Fall allerdings, wenn einzelne Sensoren zeitweilig ausfallen, ist die Verwendung der hybriden Kalibrierungsdaten 28 aus der Kreuzkalibrierung 14 entscheidend für die Güte der Messungen des im Nominalregime verbliebenen Sensors. Durch den zyklischen Verlauf der Kreuzkalibrierung ergibt sich ein Anpassungsvermögen an zeitliche Schwankungen von Kalibrierparametern.

Wenn die nominale Messwertverarbeitung mit der Reduktion 13 der Fehler der Fehlerkorrelation im nichtnominalen Mode wegen des Fehlens einiger Sensoren nicht mehr möglich ist, kann ein zweiter nichtnominaler Prozessor 16 zur Generierung der leicht degradierten nichtnominalen Lagen und Raten 29 eingesetzt werden. Dieser Prozessor kann auch im Nominalfall laufen, seine Ergebnisse werden aber nur beim Anliegen eines Nicht-Nominal-Signals von einem der Sensoren durch den Modeschalter 17 zur nachfolgenden Verarbeitung freigegeben.

Bei Anwendung von Analysen in der langsamste Zeitskala, in der weder das weiße Sensorrauschen noch sensorinterne Fehlkalibrierungen wirken, kann der Trend der durch thermoelastische Verwindungen verursachten Fehlausrichtungen der Sensoren in einer Trendidentifikation 15 bestimmt werden. Über den Konfigurationsparameterspeicher 11 wird das Ergebnis 3) der Trendanalyse der Transformationseinheit 12 aktuell bereitgestellt.

Die jeweils besten verfügbaren hybridisierten Messdaten 30, entweder die nominalen fehlerreduzierten Lagen und Raten 27 oder die entsprechenden nichtnominalen Werte 29 gelangen als Input auf eine Bank von erweiterten Kalman-Filtern 19 für unterschiedliche Modelle von Manövern des Raumflugkörpers definiert durch die Manöverparameter 31. Parallel zu den Messwerten 30 benutzen die EKF-Prozessoren die Parameter 31 der Manövermodelle aus dem Konfigurationsspeicher 11. Die gleichen Daten 30 und 31 gelangen in den MMAE-Schätzer 18, der die Gültigkeitswahrscheinlichkeit 32 der Manövertypen liefert. Auf Basis dieser Wahrscheinlichkeiten 32 wählt der Manöverschalter 20 diejenigen EKF-Outputs 33 aus, die dem wahrscheinlichsten Manövertyp entsprechen.

Letztendlich gelangen die so ausgewählten optimal hybridisierten kinematischen Messdaten 8, die aus den optimalen Schätzungen für die Lage 34, die Rate 35 und die Lagekovarianz 36 bestehen, an den Zentralrechner 6.

Die Modellparameter 31 der Manöver können in Form bestimmter Manöverprofile von Rate und Winkelbeschleunigung gegeben sein. Solche Profile werden bereits als Testdaten für die Verifikation von Sternsensoren eingesetzt. Im einfachsten Standardfall können die beiden Modelle "konstante Rate" und "konstante Winkelbeschleunigung" verwendet werden.

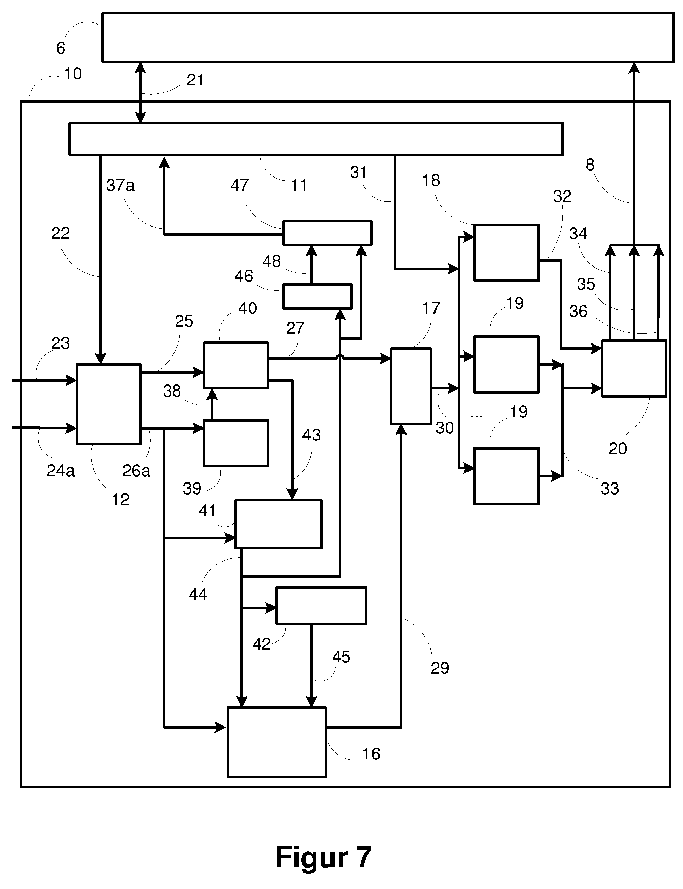

Für die Verarbeitung der Messwerte der beiden Hauptsensoren des AOD, der Lagemess- und Lagekovarianzdaten 23 von mindestens einem Sternsensor und der Ratenmessdaten 24a von einem Kreisel, ist das Blockdiagramm des Verfahrens in Figur 7 dargestellt. Die Reduktion 13 der Fehler und der Fehlerkorrelation wird in dieser Konstellation durch zwei Blöcke realisiert: der Ratenintegration 39 und dem Maximum-Likelihood-Fit 40. Die Reduktion der Fehler und ihrer Korrelation ist speziell auf die Zusammensetzung der Sternsensorfehler und Kreiselfehler zugeschnitten. Für den Kreiselsensor 3A reicht eine mittlere Güte aus, da die Ausnutzung der Synergien zwischen Kreisel und Sternsensor zu einer Leistung führt, die mit Kreiseln hoher Güte vergleichbar ist.

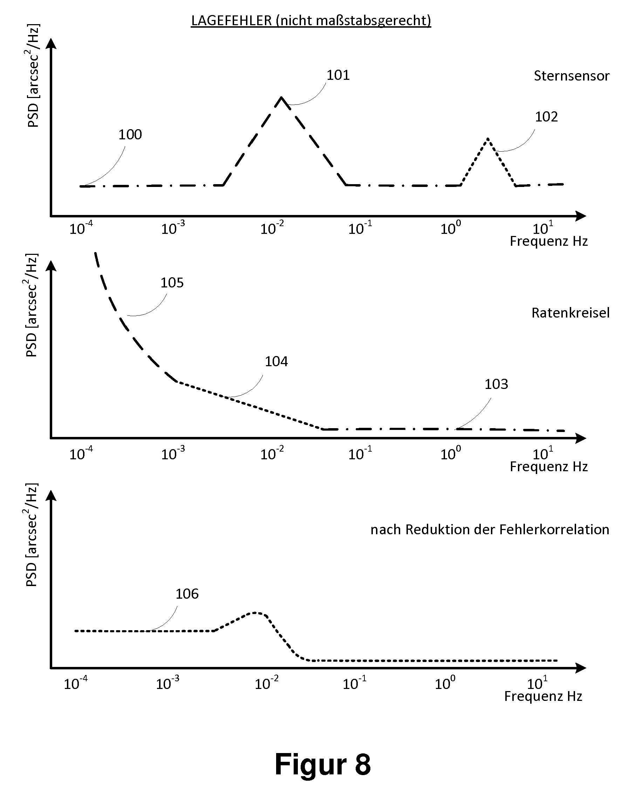

In Figur 8 sind oben die Zusammensetzung der Lagefehler eines Sternsensors und in der Mitte die Fehlerkomponenten der integrierten Raten eines Kreisels mittlerer Güte dargestellt. Die Lagefehler sind in PSD-Form (power spectral density PSD) als spektrale Fehlerleistungsdichte der Lagewinkelfehler schematisch dargestellt. Die Wirkungsweise der Fehlerreduktion wird anhand dieser Darstellung im Folgenden erläutert.

Beide Sensoren haben eine Fehlerkomponente des weißen Rauschens des Lagewinkels, sie wird NEA-Fehler (noise equivalent angle NEA) genannt. Beim Sternsensor ist der NEA-Anteil 100 größer als der NEA-Anteil 103 bei den integrierten Raten des Kreisels. Auf die Reduktion der NEA-Anteile ist der klassische EKF-Ansatz ausgelegt. Korrelierte Fehlerkomponenten können durch Kalman-Filter wenig reduziert und unter Umständen auch verstärkt werden. Beim Sternsensor gibt es zwei korrelierte Rauschkomponenten, den niederfrequenten LF-Anteil (low frequency LF) und den hochfrequenten HF-Anteil (high frequency HF). Der LF-Fehler 101 hat überwiegend geometrische Ursachen in der Größenordnung des Bildfeldes der Sternsensorkamera. Die Umsetzung dieser dem Wesen nach räumlichen LSFE-Fehler (low spatial frequency error LSFE) in zeitliche Fehler hängt von vielen variablen Parametern ab, so dass ein valides Modell, etwa als Polynom, nicht existiert. Der LF-Fehler liegt in der Zeitskala von Sekunden bis Minuten und ist für das AOC besonders kritisch, da der Regler für die Steuerung des Raumflugkörpers in diesem Frequenzbereich arbeitet. Der HF-Fehler 102 des Sternsensors liegt in der Zeitskala unter einer Sekunde und wird ebenfalls weitgehend geometrisch durch HSFE-Effekte (high spatial frequency error HSFE) in der Größe der Pixel der Sternsensorkamera verursacht. Er ist geringer als der LF-Anteil und für den Regler der Steuerung des Raumflugkörpers weniger kritisch.

Für Kreisel mittlerer Güte wirkt nur das weiße Rauschen des NEA-Anteils 103 des Fehlers der integrierten Raten im Frequenzbereich des HF-Fehlers des Sternsensors und im oberen Teil des Frequenzbereiches des LF-Fehlers. Im unteren Minutenbereich kommen beim Kreisel die ARW-Fehler (angle random walk ARW) mit linearer Frequenzcharakteristik 104 und ab dem oberen Minutenbereich die BI-Fehler (bias instability BI) mit einer Frequenzcharakteristik 105 höherer Ordnung hinzu.

Den beiden beschriebenen Spektralverläufen der Lagefehler für Sternsensoren und integrierenden Ratenkreiseln kann man entnehmen, dass im oberen und mittleren Frequenzbereich möglichst die besseren Kreiseldaten bei der Hybridisierung übernommen werden müssen und die entsprechenden Sternsensoranteile auszulöschen sind. Im unteren Frequenzbereich sollten die Sternsensordaten dominieren. Genau diese Strategie verfolgt die aus Ratenintegration 39 und Maximum-Likelihood-Fit 40 bestehende Reduktion 13 der Fehler und der Fehlerkorrelation.

Die Ratenintegration 39 ist als gleitendes Zeitfenster ausgelegt. Die transformierten Ratenmesswerte 26a innerhalb des Zeitfensters werden zwischengespeichert. Die Länge des Zeitfensters ergibt sich aus der in Figur 8 dargestellten Frequenzcharakteristik der Lagefehler von Sternsensor und Kreisel. Die ARW-Fehleranteile 104 des Kreisels müssen bei der optimal gewählten Fensterlänge gerade noch besser sein als die LF-Fehler 101 des Sternsensors. Bei einem Messzyklus von etwa 10Hz ergeben sich daraus einige Hundert bis wenige Tausend Messwerte im Zwischenspeicher. Dies ist für moderne Prozessoreinheiten 2 kein Problem. Die gemessenen und transformierten Raten 26a innerhalb des Fensters werden in der Ratenintegration 39 mit den aktuellen Kalibrierparametern Bias und Skalenfaktor korrigiert und zu Drehwinkeln um die drei Achsen des Referenzsystem aufaddiert. Anfangs sind die im Konfigurationsparameterspeicher 11 abgelegten Kalibrierparameter aus der Bodenvermessung zu benutzen, im laufenden Betrieb finden die aktuellen Werte 44 und 45 aus der Kreuzkalibrierung 14 Verwendung.

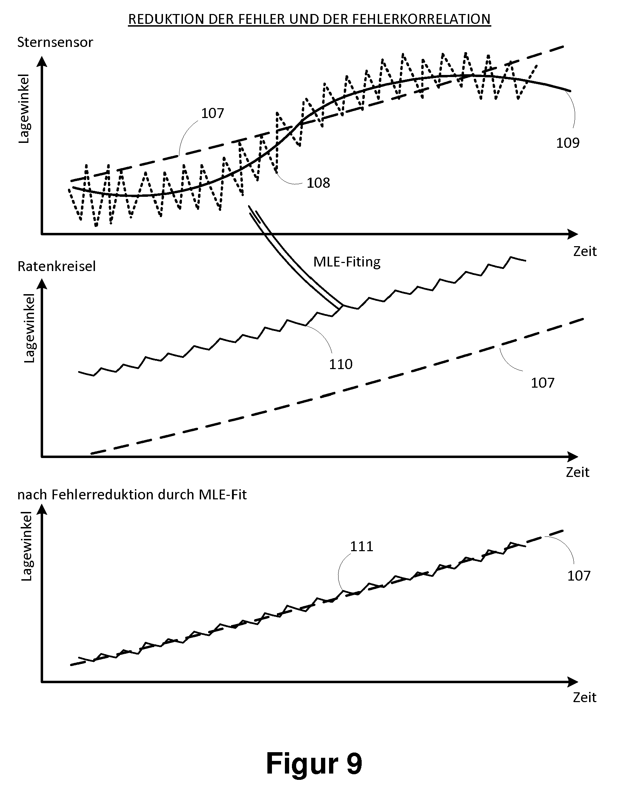

In Figur 9 Mitte ist ein auf diese Weise aus den Raten generierter Lagewinkel 110 in dem Zeitfenster dargestellt. Das gleiche Diagramm zeigt den wahren Verlauf 107 des Lagewinkels. Zwischen beiden Kurven gibt es einen Versatz, der im Wesentlichen durch die Differenz des Startwertes der Lageintegration und der entsprechenden wahren Lage bestimmt wird. Der Versatz kann durch Verwendung der Lage aus dem letzten Zyklus als Startwert minimiert werden. Das ist aber nicht zwingend, da der Versatz durch den MLE-Fit 40 ohnehin kompensiert wird.

Das obere Diagramm in Figur 9 zeigt die Kurve 108 der Lagemesswerte 25 vom Sternsensor im gleichen Zeitfenster. Hier gibt es keinen Versatz zur wahren Lage 107, da der Sternsensor die absolute Lage misst. Die Kurve 108 zeigt mit hoher Änderungsrate die NEA- und HF-Fehleranteile des Sternsensors. Sie sind größer als die bei der Kreiselkurve 110 im mittleren Diagramm. Zur Verdeutlichung des LF-Fehlers des Sternsensors ist die Kurve 109 gezeigt, die der Sternsensormessung ohne NEA- und HF-Fehler entspricht.

Der MLE-Fit 40 ist linear und bestimmt die statistisch optimale Verschiebung und Drehung der Kurve 110 mit dem Ziel, den Fehler zur Kurve 108 zu minimieren. Dabei werden die Abstände in den Messpunkten mit der inversen Kovarianz aus dem Sternsensor gewichtet, so dass nicht nur eine LSR-, sondern eine echte MLE-Schätzung durchgeführt wird. Die Kurve 111 in dem unteren Diagramm von Figur 9 zeigt die optimal verschobene und gedrehte Ratenlage. Sie stimmt nicht nur optimal zur Sternsensorlage 108 sondern auch zur wahren Lage 107. Der letzte Punkt auf der optimalen Kurve 111 stellt die dekorrelierte Lage in dem Datenausgang 27 für den aktuellen Messzeitpunkt dar. Er liegt am rechten Ende des Zeitfensters. Als dekorrelierte Rate in dem Ausgang 27 kann normaler Weise direkt der letzte Kreiselmesswert genommen werden. Unter Umständen kann es auch optimaler sein, die Rate als Differenz der beiden letzten dekorrelierten Lagen zu verwenden. Dies ist bei besonders hohen Genauigkeitsforderungen an die Rate oder dem Verdacht erheblicher Fehlkalibrierungen des Kreisels angebracht.

Die Ratenintegration 39 und der MLE-Fit 40 wiederholen sich zyklisch im Takt der Messungen. Dabei wird das Zeitfenster um eine Position verschoben und der älteste Messwertsatz gelöscht, sowie ein neuer hinzugefügt. Zur Verminderung der nötigen Operationsanzahl kann die in Anwendungen mit gleitenden Fenstern übliche Optimierungen durch Weiterverwendung von Zwischenergebnissen benutzt werden. Dazu nötige Näherungen, wie zum Beispiel eine Änderung der Kalibrierparameter mit geringerer Wiederholrate, verursachen nur vernachlässigbare Fehler.

Eine schematische Darstellung 106 der spektralen Fehlerleistungsdichte der Lagewinkel nach Anwendung von Ratenintegration 39 und MLE-Fit 40 enthält Figur 8 im unteren Diagramm. Die dekorrelierte Lagen am Ausgang 27 haben im unteren Frequenzbereich die Güte der Sternsensordaten und im oberen diejenige der Kreiseldaten. Nur im unteren Teil des LF-Anteils der Sternsensorfehler gelingt es nicht ganz, den Fehler auf weißes Rauschen zu reduzieren. Dazu wären teure Kreisel mit besseren ARW-Parametern nötig.

Sternsensoren können durch Blendung oder Strahlung über kurze bis mittlere Zeitdauer ausfallen. Für die Überbrückung dieser Ausfallzeiten mit Lagemessungen nur aus den Kreiseldaten ist eine genaue und aktuelle Kalibrierung des Kreisels erforderlich. Diese Kalibrierdaten 28 stellt die Kreuzkalibrierung 14 in der speziellen Ausprägung als Konverter 41 und Separator 42 für die getrennte Schätzung von Bias und Skalenfaktor zur Verfügung. Biasfehler und Skalenfaktorfehler sind erst über längere Messzeiten sicher detektierbar. Die Zeitskala der Ratenintegration 39 und des MLE-Fit 40 ist dafür nicht geeignet. Bias und Skalenfaktor werden partiell durch gleiche Faktoren beeinflusst, so dass die entsprechenden Fehler nicht unkorreliert und schwer zu trennen sind. Neben der erforderlichen Zeitskala sind für die Bestimmung der Skalenfaktorfehler auch hohe Raten erforderlich.

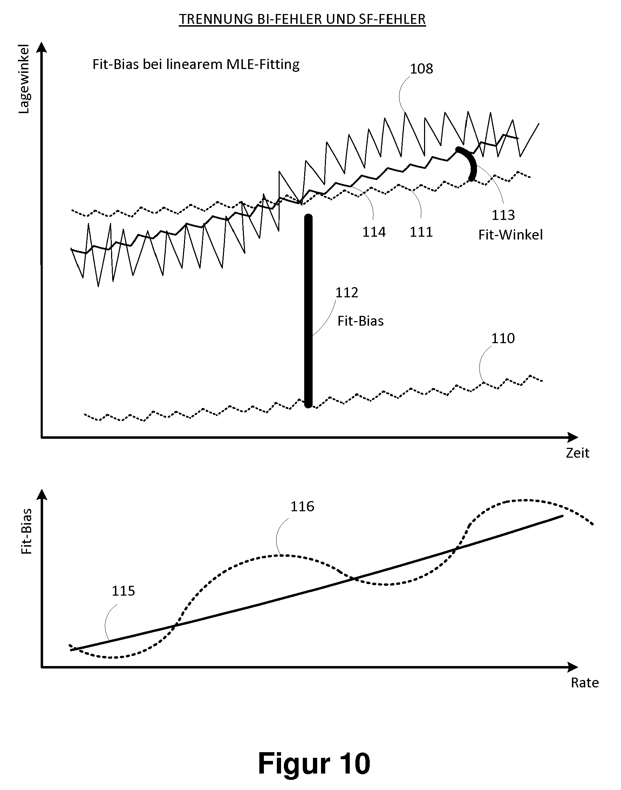

Unter der Annahme, dass der Bias konstant ist, schlägt sich der Bias in einem über die Zeit linear ansteigenden Offset zwischen der wahren und der Kreisellage nieder. Bei konstantem Skalenfaktorfehler ist der Effekt eines linearen Anstieges des Ratenfehlers über die tatsächliche Rate zu beobachten. In den zu Winkeln integrierten Raten wirkt sich ein konstanter Skalenfaktorfehler somit als quadratisch ansteigender Lagefehler aus. Allerdings erfolgt der Anstieg über die tatsächliche Rate, nicht über die Zeit. Diese komplexe Wirkungsweise und die Tatsache, dass Bias und Skalenfaktor nicht zeitkonstant sind, machen es unmöglich aus dem in dem MLE-Fit 40 bestimmten Fit-Bias 122 und Fit-Winkel 113, wie sie in Figur 10 oben verdeutlicht sind, den Bias und den Skalenfaktor abzuleiten. Dies gilt auch für den Fall, dass die Zeitskala des MLE-Fit 40 bis zum Wirkungsbereich der Biasinstabilität ausgedehnt werden würde. Die Biasinstabilität und der Skalenfaktorfehler sind immer vermischt in Fit-Bias 122 und Fit-Winkel 113 zu finden. Sie müssen mit anderen Verfahren getrennt werden.

Die Schätzung des Bias ist einfacher, da er ohnehin schon am Ausgang des MLE-Fit 40 in den Werten 43 des Fit-Bias gegenüber dem Skalenfaktorfehler dominiert. Außerdem kommen hohe Raten mit stark wirkendem Skalenfaktorfehler sehr selten im Missionsverlauf vor. Die Biasschätzwerte 44 sind somit einfach durch eine der Zeitskala von Biasinstabilität und Skalenfaktorfehler entsprechende Tiefpassfilterung der vom MLE-Fit 40 anliegenden Werte 43 des Fit-Bias im Konverter 41 zu schätzen.

Für die Schätzung des Skalenfaktors muss auf die unverarbeiteten Ratenmesswerte 26a und die Werte 43 des Fit-Bias zurückgegriffen werden. Die Werte 43 des Fit-Bias werden als Funktionstabelle der Ratenmesswerte 26a zwischengespeichert. Dazu wird eine Tabelle im Umfang einer ausreichenden Rasterung des Dynamikbereichs des Kreisels angelegt. Die zu den gerasterten Ratenwerten gehörigen Werte 43 des Fit-Bias werden mittels eines IIR-Filters (infinite impulse response IIR) gemittelt in dieser Tabelle akkumuliert. Die Kurve 116 in Figur 10 unten veranschaulicht das Ergebnis der Transformation der Werte (43) des Fit-Bias vom Zeitraum in den Ratenraum. In dieser Darstellung können die Skalenfaktorschätzwerte 45 als Anstieg einer Regressionsgerade 115 bestimmt werden. Der nichtnominale Prozessor 16 bestimmt in dieser Konfiguration allein aus den aktuellen Ratenmesswerte 26a die leicht degradierten nichtnominalen Lagen und Raten 29 für den Zeitraum des temporären Ausfalls der Sternsensordaten. Dies erfolgt durch Korrektur und Integration der der Ratenmesswerte 26a ab dem Zeitpunkt, zu dem das Nicht-Nominal-Signal vom Sternsensor erstmals anliegt. Zum gleichen Zeitpunkt werden die letzten noch mit vorhandenen Messwerten 25 des Sternsensors 1 geschätzten Werte des Skalenfaktors 45 und des Bias 44 für die Korrektur der Ratenmesswerte 26a über den gesamten Zeitraum des Ausfalls des Sternsensors 1 übernommen.

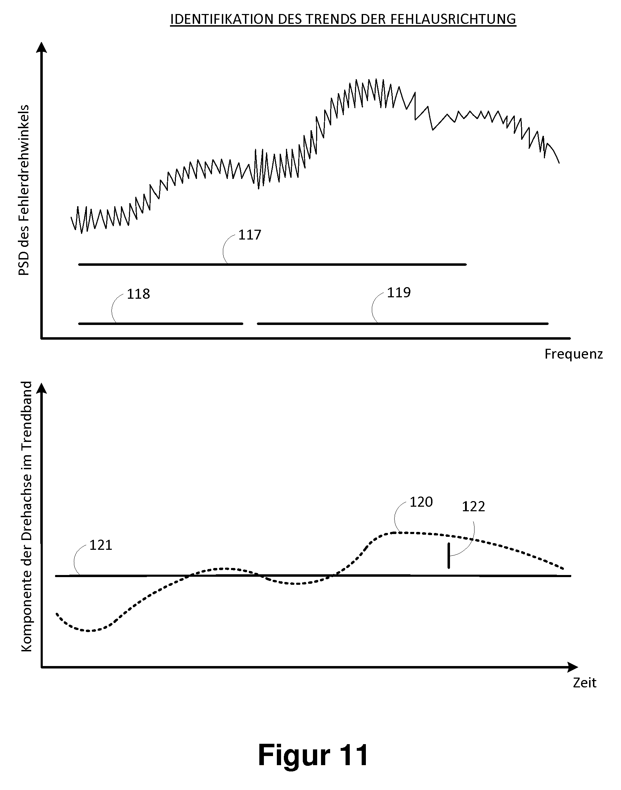

Für die Bestimmung der veränderlichen Fehlausrichtungen der Sensoren in der Trendidentifikation (15) gibt es, ähnlich wie bei der Bias und Skalenfaktorschätzung, das Problem der überlappenden Bandbreiten unterschiedlicher Wirkfaktoren. Das ist in Figur 11 oben verdeutlicht, wo die summarische spektrale Leistungsdichte aller Lagefehler mit den Bandbreiten für Biasinstabilität und Skalenfaktorfehler (117), für den Fehlausrichtungstrend (118) und für die trotz Fehlerreduktion verbleibenden NEA- und ARW/LF-Restfehler (119) dargestellt ist. Der Trend kann nicht durch einfache Bandpassfilterung von den anderen Fehlertypen getrennt werden. Dazu muss ein anderes diskriminierendes Kriterium und nicht die Frequenz benutzt werden.

Die thermoelastische Verwindung ergibt sich aus der Struktur des Raumflugkörpers, die fest an das Satellitenkoordinatensystem gebunden ist. Sie erfolgt vornehmlich um eine bestimmte Verwindungsachse in dieser Struktur. Das unterscheidet den Trend von anderen Lagefehlerkomponenten. Beim Sternsensor hängen beispielsweise die Fehler von der Lage des Bildfeldes im Sternhimmel oder von der Lage des Sterns in Bildfeld und im Pixel ab und haben wechselnde Drehachsen im Koordinatensystem des Raumflugkörpers.

Dieses Identifizierungsmerkmal kann vorzugsweise durch die Schätzung des konstanten Anteils der Lagefehlerdrehachsen in einem Verwindungsachsenschätzer 46 ausgenutzt werden. Dazu ist die Deltadrehung des Lagefehlers in die entsprechenden Drehachsenkomponenten und den Drehwinkel zu konvertieren. Als Lagefehler können die Biasschätzwerte 44 verwendet werden, die nichts anders als die tiefpassgefilterten Werte des Fit-Bias darstellen. In Figur 11 unten ist der Verlauf 120 der Werte einer Achsenkomponente der tiefpassgefilterten Lagefehler dargestellt. Der konstante Mittelwert 121 dieses Verlaufs 120 stellt die entsprechende Komponente der Verwindungsachse dar. Die Differenz 122 spiegelt die nicht zum Verwindungstrend gehörenden anderen Lagefehler im gleichen Frequenzbereich wider. Die drei Mittelwerte der Achsenkomponenten bilden die geschätzte Verwindungsachse 48. Sie gehen gemeinsam mit den als Lagefehler verwendeten Biasschätzwerten 44 in der Schätzung 47 der Delta-Drehmatrix der Verwindung ein. Damit können die Transformationsparameter 37a entsprechend dem Trend aktualisierte werden. Neben der Verwindungsdrehachse ist dazu der Verbindungsdrehwinkel erforderlich. Er kann aus der Projektion der Gesamtlagefehlerdrehung auf die Verwindungsachse berechnet werden.

### Bezugszeichenliste

- 1: Sternsensor
- 1a: Sternsensor Kamerakopf
- 1b: Prozessoreinheit des Sternsensors
- 2a: zentrale, Master-Prozessoreinheit
- 2b: zentrale, redundante Prozessoreinheit
- 3: weitere kinematische AOCS-Sensoren
- 3a: Sensorelement eines weiteren kinematischen AOCS-Sensors
- 3b: Prozessoreinheit eines weiteren kinematischen AOCS-Sensors
- 3A: Kreiseldrehratensensor
- 3B: Erdsensor
- 3C: GNSS Sensor
- 4: Sensor-Bus, erster Bus
- 5: AOCS-Bus des Satelliten, zweiter Bus
- 6: Zentralrechner
- 7: Synchronisierungsleitung
- 8: hybridisierte kinematische Messdaten
- 8a: hybridisierte kinematische Messdaten von der Master-Prozessoreinheit
- 8b: hybridisierte kinematische Messdaten von der redundanten Prozessoreinheit
- 9: Punkt-zu-Punkt-Datenverbindung
- 10: optimierter Hybridisierungsprozessor
- 11: Konfigurationsparameterspeicher
- 12: Transformationsprozessor
- 13: Reduktion der Fehler und der Fehlerkorrelation
- 14: Kreuzkalibrierung
- 15: Trend-Identifikation
- 16: Nicht-Nominal-Prozessor
- 17: Mode-Schalter
- 18: MMAE-Schätzer
- 19: sechsdimensionales EKF
- 20: Manöverschalter
- 21: Konfigurationsdaten
- 22: Transformationsparameter
- 23: synchrone Lagemessdaten und Lagekovarianz vom Sternsensor
- 24: andere synchrone kinematische Messdaten
- 24a: synchrone Ratenmessdaten vom Kreisel
- 25: Lagedaten und Lagekovarianz vom Sternsensor im Referenzsystem
- 26: andere Messdaten im Referenzsystem
- 26a: Ratenmessdaten im Referenzsystem
- 27: dekorrelierte Lagen und Raten
- 28: hybride Kalibrierungsdaten
- 29: nichtnominale Lagen und Raten
- 30: beste Lagen und Raten
- 31: Manöverparameter
- 32: Gültigkeitswahrscheinlichkeiten der Manöver
- 33: EKF-Schätzwerte für Lage, Rate und Kovarianz für die verschiedenen Manöver-Modellen
- 34: optimale Schätzwerte der Lage für das gültige Manöver
- 35: optimale Schätzwerte der Rate für das gültige Manöver
- 36: optimale Schätzwerte der Lagekovarianz für das gültige Manöver
- 37: nach dem Trend aktualisierte Transformationsparameter
- 37a: mit der Delta-Drehmatrix entsprechend dem Trend aktualisierte Transformationsparameter
- 38: integrierte Raten
- 39: Ratenintegration
- 40: MLE-Fit
- 41: Konvertierung der bandpassgefilterten Werte des Fit-Bias vom Zeit-Raum in den Raten-Raum
- 42: B&SF-Separator
- 43: Werte des Fit-Bias
- 44: Biasschätzwerte
- 45: Skalenfaktorschätzwerte
- 46: Schätzung der Verwindungsachse
- 47: Schätzung der Delta-Drehmatrix der Verwindung
- 48: geschätzte Verwindungsachse
- 100: PSD des NEA-Lagefehlers des Sternsensors
- 101: PSD des LFE-Lagefehlers des Sternsensors
- 102: PSD des HFE-Lagefehlers des Sternsensors
- 103: PSD des NEA-Lagefehlers der integrierten Raten des Kreisels
- 104: PSD des ARW-Lagefehlers der integrierten Raten des Kreisels
- 105: PSD des BI-Lagefehlers der integrierten Raten des Kreisels
- 106: PSD der hybridisierten Lage nach Reduktion der Fehler und der Fehlerkorrelation
- 107: wahre Lage
- 108: Lage vom Sternsensor mit LFE-, HFE- und NEA-Fehlern
- 109: Lage vom Sternsensor nur mit LFE-Fehlern
- 110: Lage vom Kreisel mit BI-, ARW- und NEA-Fehlern
- 111: verschobene und gedrehte Ratenlage
- 112: Fit-Bias
- 113: Fit-Winkel
- 114: verschobene Ratenlage
- 115: Regressionsgerade der durch Fehler des Skalenfaktors bedingten Fit-Bias Anteile
- 116: durch Skalenfaktorfehler und Biasinstabilität bedingter Fit-Bias
- 117: Bandbreite von BI- und SF-Fehlern
- 118: Bandbreite von Trends der Verdrehung
- 119: Bandbreite von NEA-Fehlern, sowie von reduzierten ARW- und LF-Fehlern
- 120: variable Drehachse aller Einflussfaktoren in Trendband
- 121: feste Drehachse der Verwindung
- 122: Verschiebungen der Drehachse durch scheinbare Verwindungen

## Patentansprüche

1. Lage- und Orbit-Steuersystem für einen Raumflugkörper enthaltend:
- einen Sternsensor (1) mit einem optischen Kamerakopf (1a) und einer Prozessoreinheit (1b); sowie
- weitere kinematische Sensoren (3) mit je einem Sensorelement (3a) und einer Prozessoreinheit (3b); **dadurch gekennzeichnet, dass** die Prozessoreinheit (1 b) des Sternsensors (1) als zentrale Master-Prozessoreinheit (2a) vorgesehen ist;
eine Prozessoreinheit (3b) eines der weiteren kinematischen Sensoren (3) mit der Prozessoreinheit (1 b) des Sternsensors (1) gleichwertig ist und als zentrale redundante Prozessoreinheit (2b) nominiert ist; und
dass das Lage- und Orbit-Steuersystem weiterhin enthält:
- einen ersten Bus (4), der die weiteren kinematischen Sensoren (3) mit den zentralen Prozessoreinheiten (2a) und (2b) verbindet;
- eine Synchronisierungsleitung (7) von der jeweils aktiven zentralen Prozessoreinheit (2a) oder (2b) zu den weiteren kinematischen Sensoren (3) zur Bereitstellung eines einheitlichen Zeittakts;
- einen Anschluss der zentralen Prozessoreinheiten (2a) und (2b) an einen zweiten Bus (5) des Raumflugkörpers, über den die jeweils aktive zentrale Prozessoreinheit (2a), (2b) einem Zentralrechner (6) des Raumflugkörpers (6) hybridisierte kinematische Messdaten (8) liefert, die nach einem Verfahren zur Hybridisierung (10) aus den synchronen kinematischen Messdaten (23) des Sternsensors und Messdaten (24) der anderen Sensoren erzeugt sind.

2. Lage- und Orbit-Steuersystem nach Anspruch 1, **dadurch gekennzeichnet, dass** der einheitliche Zeittakt über eine Synchronisierungsleitung (7) von dem Raumflugkörper bereitgestellt ist.

3. Lage- und Orbit-Steuersystem nach Anspruch 1 bis 2, **dadurch gekennzeichnet, dass** als weitere kinematische Sensoren (3) eine beliebige Kombination aus Kreiseldrehratensensoren, Beschleunigungssensoren, Magnetometern, Sonnensensoren, Erdsensoren, GNSS-Sensoren vorgesehen sind.

4. Lage- und Orbit-Steuersystem nach Anspruch 1 bis 3, **dadurch gekennzeichnet, dass** eine Prozessoreinheit eines weiteren kinematischen Sensoren (3) die Rolle der zentralen Master-Prozessoreinheit (2a) übernimmt und die Prozessoreinheit (1b) des Sternsensors als zentrale redundante Prozessoreinheit (2b) nominiert ist.

5. Lage- und Orbit-Steuersystem nach Anspruch 1 bis 4, **dadurch gekennzeichnet, dass** der Sternsensor aus zumindest zwei Kameraköpfen (1a) und einer Prozessoreinheit (1 b) gebildet ist.

6. Lage- und Orbit-Steuersystem nach Anspruch 1 bis 5, **dadurch gekennzeichnet, dass** neben den zentralen Prozessoreinheiten (2a) und (2b) einzelne oder alle Sensoren (3) zusätzlich mit dem zweiten Bus (5) des Raumflugkörpers verbunden sind.

7. Lage- und Orbit-Steuersystem nach Anspruch 1 bis 5, **dadurch gekennzeichnet, dass** einzelne oder alle Sensoren (3) zusätzlich direkt mit dem Zentralrechner (6) verbunden sind.

8. Lage- und Orbit-Steuersystem nach Anspruch 1 bis 7, **dadurch gekennzeichnet, dass** der oder die Kameraköpfe (1a) von der Prozessoreinheit (1b) abgesetzt und nach dem Punkt-zu-Punkt-Prinzip mit der Prozessoreinheit (1 b) verbunden sind.

9. Verfahren zur Erzeugung hybridisierter kinematischer Messdaten (8) aus synchronen Lagemess- und Lagekovarianzdaten (23) von mindestens einem Sternsensor und aus den synchronen Messdaten (24) weiterer kinematischer Sensoren (3), **gekennzeichnet durch** folgende Verarbeitungsschritte:
- Koordinatentransformation der synchronen Lagemess- und Lagekovarianzdaten (23) und der synchronen Messdaten (24) weiterer kinematischer Sensoren (3) in ein einheitliches Referenzsystem **durch** einen Transformationsprozessor (12) unter Verwendung von Transformationsparametern (22),
- parallele Weiterleitung der in das einheitliche Referenzsystem transformierten Lagemess- und Lagekovarianzdaten (25) des Sternsensors und der weiterer kinematischer Messdaten (26) an eine Reduktion (13) der Fehler und der Fehlerkorrelation, an eine Kreuz-Kalibrierung (14) und an einen Nicht-Nominal-Prozessor (16),
- Erzeugung von dekorrelierten Lagen und Raten (27) mit verminderter Kovarianz in der Reduktionseinheit (13) mittels des Ersatzes stark korrelierter Anteile der Messdaten eines Sensors **durch** gering korrelierte Daten eines anderen Sensors,
- parallele Weiterleitung der dekorrelierten Lagen und Raten (27) an die Kreuz-Kalibrierung (14) und an eine Trend-Identifikation (15), sowie an einen Mode-Schalter (17),
- Identifikation des Langzeittrends der Transformationsparameter (22) zur Transformation der Messdaten (23) und (24) aller Sensoren in ein einheitliches Referenzsystem in einer Trend-Identifikation (15) und Ablage der nach dem Trend aktualisierten Transformationsparameter (37) in einen Konfigurationsparameterspeicher (11), von wo aus sie für nachfolgende Transformationen benutzt werden,
- Erzeugung von hybriden Kalibrierungsdaten (28) in der Kreuz-Kalibrierung (14) aus den in das einheitliche Referenzsystem transformierten Messdaten (25) und (26), sowie aus den dekorrelierten Lagen und Raten (27),
- Erzeugung von nichtnominalen Lagen und Raten (29) im Nicht-Nominal-Prozessor (16) wobei die Daten von Sensoren mit nichtnominalem Status nicht verwendet werden und nominal arbeitende Sensoren mit Hilfe der hybriden Kalibrierungsdaten (28) kalibriert werden, sowie Weiterleitung der nichtnominalen Lagen und Raten (29) an den Mode-Schalter (17),
- Auswahl der dekorrelierten Lagen und Raten (27) oder der nichtnominalen Lagen und Raten (29) in Abhängigkeit vom nominalen oder nichtnominalen Status der Sensoren, sowie Weiterleitung der ausgewählten Lage- und Ratendaten (30) an eine **durch** konfigurierbare Manöverparameter (31) definierte Bank von sechsdimensionalen EKF-Schätzern (19) und einen die Bank kontrollierenden adaptiven Multimodellschätzer (18),
- Bestimmung der Gültigkeitswahrscheinlichkeiten (32) der Manöver in dem adaptiven Multimodellschätzer (18) aus den ausgewählten Lage- und Ratendaten (30) und den Manöver-Parametern (31) aus dem Konfigurationsparameterspeicher (11) und Weiterleitung der Gültigkeitswahrscheinlichkeiten (32) der Manöver an einen Manöverschalter (20),
- Auswahl desjenigen Ergebnisses (33) des sechsdimensionalen EKF-Schätzers (19) mit der höchsten Gültigkeitswahrscheinlichkeiten (32) seines Manövers in dem Manöverschalter (20) und Weiterleitung der ausgewählten optimal hybridisierten kinematischen Messdaten (8), die aus den optimalen Schätzungen für die Lage (34), die Rate (35) und die Lagekovarianz (36) bestehen, an den Zentralrechner (6) des Raumflugkörpers.

10. Verfahren nach Anspruch 9 **dadurch gekennzeichnet, dass** neben den Daten des Sternsensors synchrone Ratenmessdaten (24a) von einem Kreisel benutzt werden, die in Raten (26a) im einheitlichen Referenzsystem transformiert werden.

11. Verfahren nach Anspruch 9 und 10 **dadurch gekennzeichnet, dass** die Reduktion (13) der Fehler und der Fehlerkorrelation als Ratenintegration (39) und Maximum-Likelihood-Fit (40) zwischen integrierten Raten (38) und den transformierten Daten (25) des Sternsensors realisiert ist.

12. Verfahren nach Anspruch 9 bis 11 **dadurch gekennzeichnet, dass** die Kreuz-Kalibrierung (14) in Form einer Tiefpassfilterung und Konvertierung (41) zu von Raten abhängenden Biaswerten mit anschließender Separation (42) von Bias und Skalenfaktor des Kreiselsensors ausgeführt ist.

13. Verfahren nach Anspruch 9 bis 12 **dadurch gekennzeichnet, dass** der Nicht-Nominal-Prozessor (16) beim Ausfall der Sternsensoren mit den in der Separation (42) von Bias (44) und Skalenfaktor (45) geschätzten Werten die nichtnominalen Lagen und Raten (29) allein aus den Raten (26a) im einheitlichen Referenzsystem bestimmt.

14. Verfahren nach Anspruch 9 bis 13 **dadurch gekennzeichnet, dass** die Trend-Identifikation (15) in Form einer Schätzung (46) der Verwindungsachse des Satelliten und einer Schätzung (47) der Delta-Drehmatrix der Verwindung ausgeführt ist und die Trendaktualisierung der Transformationsparameter (37a) durch Anwendung der Deltadrehung erfolgt.

## Claims

1. Position and orbit control system for a spacecraft, containing:
- a star sensor (1) having an optical camera head (1a) and a processor unit (1b); and
- further kinematic sensors (3) each having a sensor element (3a) and a processor unit (3b); **characterized in that**
the processor unit (1b) of the star sensor (1) is provided as a central master processor unit (2a);
a processor unit (3b) of one of the further kinematic sensors (3) is equivalent to the processor unit (1b) of the star sensor (1) and is nominated as a central redundant processor unit (2b); and
**in that** the position and orbit control system also contains:
- a first bus (4) which connects the further kinematic sensors (3) to the central processor units (2a) and (2b);
- a synchronization line (7) from the respectively active central processor unit (2a) or (2b) to the further kinematic sensors (3) for the purpose of providing a consistent timing cycle;
- a connection of the central processor units (2a) and (2b) to a second bus (5) of the spacecraft, via which the respectively active central processor unit (2a), (2b) provides a central computer (6) of the spacecraft (6) with hybridized kinematic measurement data (8) which have been produced from the synchronous kinematic measurement data (23) from the star sensor and measurement data (24) from the other sensors according to a hybridization method (10).

2. Position and orbit control system according to Claim 1, **characterized in that** the consistent timing cycle is provided by the spacecraft via a synchronization line (7).

3. Position and orbit control system according to Claims 1 to 2, **characterized in that** any desired combination of gyro rate-of-rotation sensors, acceleration sensors, magnetometers, sun sensors, Earth sensors, GNSS sensors is provided as further kinematic sensors (3).

4. Position and orbit control system according to Claims 1 to 3, **characterized in that** a processor unit of a further kinematic sensor (3) assumes the role of the central master processor unit (2a) and the processor unit (1b) of the star sensor is nominated as the central redundant processor unit (2b).

5. Position and orbit control system according to Claims 1 to 4, **characterized in that** the star sensor is formed from at least two camera heads (1a) and a processor unit (1b).

6. Position and orbit control system according to Claims 1 to 5, **characterized in that**, in addition to the central processor units (2a) and (2b), individual sensors or all sensors (3) are additionally connected to the second bus (5) of the spacecraft.

7. Position and orbit control system according to Claims 1 to 5, **characterized in that** individual sensors or all sensors (3) are additionally directly connected to the central computer (6).

8. Position and orbit control system according to Claims 1 to 7, **characterized in that** the camera head(s) (1a) is/are offset from the processor unit (1b) and is/are connected to the processor unit (1b) according to the point-to-point principle.

9. Method for producing hybridized kinematic measurement data (8) from synchronous position measurement and position covariance data (23) from at least one star sensor and from the synchronous measurement data (24) from further kinematic sensors (3), **characterized by** the following processing steps:
- coordinate transformation of the synchronous position measurement and position covariance data (23) and of the synchronous measurement data (24) from further kinematic sensors (3) to a consistent reference system by means of a transformation processor (12) using transformation parameters (22),
- parallel forwarding of the position measurement and position covariance data (25) from the star sensor, which have been transformed to the consistent reference system, and of the further kinematic measurement data (26) to a reduction (13) of the errors and the error correlation, to a cross-calibration (14) and to a non-nominal processor (16),
- production of decorrelated positions and rates (27) with reduced covariance in the reduction unit (13) by replacing strongly correlated parts of the measurement data from a sensor with loosely correlated data from another sensor,
- parallel forwarding of the decorrelated positions and rates (27) to the cross-calibration (14) and to a trend identification (15) and to a mode switch (17),
- identification of the long-term trend of the transformation parameters (22) for transforming the measurement data (23) and (24) from all sensors to a consistent reference system in a trend identification (15), and storage of the transformation parameters (37) updated according to the trend in a configuration parameter memory (11), from where they are used for subsequent transformations,
- production of hybrid calibration data (28) in the cross-calibration (14) from the measurement data (25) and (26) transformed to the consistent reference system and from the decorrelated positions and rates (27),
- production of non-nominal positions and rates (29) in the non-nominal processor (16), the data from sensors with a non-nominal status not being used and nominally operating sensors being calibrated with the aid of the hybrid calibration data (28), and forwarding of the non-nominal positions and rates (29) to the mode switch (17),
- selection of the decorrelated positions and rates (27) or the non-nominal positions and rates (29) on the basis of the nominal or non-nominal status of the sensors, and forwarding of the selected position and rate data (30) to a bank of six-dimensional EKF estimators (19), which is defined by configurable manoeuver parameters (31), and an adaptive multi-model estimator (18) controlling the bank,
- determination of the validity probabilities (32) of the manoeuvers in the adaptive multi-model estimator (18) from the selected position and rate data (30) and the manoeuver parameters (31) from the configuration parameter memory (11), and forwarding of the validity probabilities (32) of the manoeuvers to a manoeuver switch (20),
- selection of that result (33) from the six-dimensional EKF estimator (19) which has the highest validity probabilities (32) of its manoeuver in the manoeuver switch (20), and forwarding of the selected optimally hybridized kinematic measurement data (8), which consist of the optimal estimates for the position (34), the rate (35) and the position covariance (36), to the central computer (6) of the spacecraft.

10. Method according to Claim 9, **characterized in that** in addition to the data from the star sensor, synchronous rate measurement data (24a) from a gyro are used, which rate measurement data are transformed into rates (26a) in the consistent reference system.

11. Method according to Claims 9 and 10, **characterized in that**
the reduction (13) of the errors and the error correlation is implemented as rate integration (39) and maximum likelihood fit (40) between integrated rates (38) and the transformed data (25) from the star sensor.

12. Method according to Claims 9 to 11, **characterized in that**
the cross-calibration (14) is carried out in the form of low-pass filtering and conversion (41) to bias values dependent on rates with subsequent separation (42) of the bias and scale factor of the gyro sensor.

13. Method according to Claims 9 to 12, **characterized in that**
if the star sensors with the values estimated in the separation (42) of the bias (44) and the scale factor (45) fail, the non-nominal processor (16) determines the non-nominal positions and rates (29) solely from the rates (26a) in the consistent reference system.

14. Method according to Claims 9 to 13, **characterized in that**
the trend identification (15) is carried out in the form of an estimation (46) of the torsion axis of the satellite and an estimation (47) of the delta rotation matrix of the torsion, and the trend updating of the transformation parameters (37a) is carried out by using the delta rotation.

## Revendications

1. Système de commande de position et d'orbite pour un engin spatial, comprenant :
- un détecteur d'étoiles (1) muni d'une tête de caméra optique (1a) et d'une unité à processeur (1b) ; ainsi que
- des détecteurs cinématiques supplémentaires (3) respectivement munis d'un élément détecteur (3a) et d'une unité à processeur (3b) ; **caractérisé en ce que** l'unité à processeur (1b) du détecteur d'étoiles (1) est conçue en tant qu'unité à processeur maître centrale (2a) ;
une unité à processeur (3b) de l'un des détecteurs cinématiques supplémentaires (3) est équivalente à l'unité à processeur (1b) du détecteur d'étoiles (1) et est désignée en tant qu'unité à processeur redondante centrale (2b) ; et
**en ce que** le système de commande de position et d'orbite comprend en outre :
- un premier bus (4) qui relie les détecteurs cinématiques supplémentaires (3) aux unités à processeur centrales (2a) et (2b) ;
- une ligne de synchronisation (7) de l'unité à processeur centrale (2a) ou (2b) respectivement active vers les détecteurs cinématiques supplémentaires (3) destinée à délivrer un cycle d'horloge uniforme ;
- un raccordement des unités à processeur centrales (2a) et (2b) à un deuxième bus (5) de l'engin spatial, par le biais duquel l'unité à processeur centrale (2a), (2b) respectivement active délivre à un ordinateur central (6) de l'engin spatial (6) des données de mesure cinématiques (8) rendues hybrides, lesquelles sont générées d'après un procédé d'hybridation (10) à partir des données de mesure cinématiques synchrones (23) du détecteur d'étoiles et des données de mesure (24) des autres détecteurs.

2. Système de commande de position et d'orbite selon la revendication 1, **caractérisé en ce que** le cycle d'horloge uniforme est délivré par l'engin spatial par le biais d'une ligne de synchronisation (7).

3. Système de commande de position et d'orbite selon les revendications 1 à 2, **caractérisé en ce que** les détecteurs cinématiques supplémentaires (3) prévus sont une combinaison quelconque de détecteurs de vitesse de rotation gyroscopique, de détecteurs d'accélération, de magnétomètres, de détecteurs de soleil, de détecteurs de terre, de détecteurs GNSS.

4. Système de commande de position et d'orbite selon les revendications 1 à 3, **caractérisé en ce qu'**une unité à processeur centrale d'un détecteur cinématique supplémentaire (3) prend en charge le rôle de l'unité à processeur maître centrale (2a) et l'unité à processeur (1b) du détecteur d'étoiles est désignée en tant qu'unité à processeur redondante centrale (2b).

5. Système de commande de position et d'orbite selon les revendications 1 à 4, **caractérisé en ce que** le détecteur d'étoiles est formé d'au moins deux têtes de caméra (1a) et d'une unité à processeur (1b).

6. Système de commande de position et d'orbite selon les revendications 1 à 5, **caractérisé en ce qu'**en plus des unités à processeur centrales (2a) et (2b), certains ou la totalité des détecteurs (3) sont en plus reliés au deuxième bus (5) de l'engin spatial.

7. Système de commande de position et d'orbite selon les revendications 1 à 5, **caractérisé en ce que** certains ou la totalité des détecteurs (3) sont en plus reliés directement à l'ordinateur central (6).

8. Système de commande de position et d'orbite selon les revendications 1 à 7, **caractérisé en ce que** le ou les têtes de caméra (1a) dont décalées par rapport à l'unité à processeur (1b) et sont reliées à l'unité à processeur (1b) selon le principe point à point.

9. Procédé de génération de données de mesure cinématiques (8) rendues hybrides à partir de données de mesure de position et de covariance de position synchrones (23) provenant d'au moins un détecteur d'étoiles et à partir des données de mesure synchrones (24) de détecteurs cinématiques supplémentaires (3), **caractérisé par** les étapes suivantes :
- transformation des coordonnées des données de mesure de position et de covariance de position synchrones (23) et des données de mesure synchrones (24) des détecteurs cinématiques supplémentaires (3) dans un système de référence uniforme par un processeur de transformation (12) en utilisant des paramètres de transformation (22),
- transmission en parallèle des données de mesure de position et de covariance de position (25) du détecteur d'étoiles transformées dans le système de référence uniforme et des données de mesure cinématiques supplémentaires (26) à une réduction (13) des erreurs et de la corrélation d'erreurs, à un calibrage circulaire (14) et à un processeur non nominal (16),
- génération de positions et de vitesses décorrélées (27) avec une covariance réduite dans l'unité de réduction (13) par remplacement des parts fortement corrélées des données de mesure d'un détecteur par les données faiblement corrélées d'un autre détecteur,
- transmission en parallèle des positions et des vitesses décorrélées (27) au calibrage circulaire (14) et à une identification de tendance (15) ainsi qu'à un commutateur de mode (17),
- identification de la tendance à long terme des paramètres de transformation (22) en vue de la transformation des données de mesure (23) et (24) de tous les détecteurs dans un système de référence uniforme dans une identification de tendance (15) et stockage des paramètres de transformation actualisés (37) d'après la tendance dans une mémoire de paramètres de configuration (11) depuis laquelle ils sont utilisés pour les transformations suivantes,
- génération de données de calibrage hybrides (28) dans le calibrage circulaire (14) à partir des données de mesure (25) et (26) transformées dans le système de référence uniforme, ainsi qu'à partir des positions et des vitesses décorrélées (27),
- génération de positions et de vitesses non nominales (29) dans le processeur non nominal (16), les données des détecteurs ayant un état non nominal n'étant pas utilisées et les détecteurs fonctionnant de manière nominale étant calibrés à l'aide des données de calibrage hybrides (28), ainsi que transmission des positions et des vitesses non nominales (29) au commutateur de mode (17),
- sélection des positions et des vitesses décorrélées (27) ou des positions et des vitesses non nominales (29) en fonction de l'état nominal ou non nominal des détecteurs, ainsi que transmission des données de position et de vitesse sélectionnées (30) à une banque d'estimateurs de CGE (19) à six dimensions, définie par des paramètres de manoeuvre (31) configurables, et à un estimateur à modèles multiples adaptatif (18) qui contrôle la banque,
- détermination des probabilités de validité (32) de la manoeuvre dans l'estimateur à modèles multiples adaptatif (18) à partir des données de position et de vitesse sélectionnées (30) et des paramètres de manoeuvre (31) issus de la mémoire de paramètres de configuration (11) et transmission des probabilités de validité (32) de la manoeuvre à un commutateur de manoeuvre (20),
- sélection du résultat (33) de l'estimateur de CGE (19) à six dimensions ayant les probabilités de validité (32) les plus élevées de sa manoeuvre dans le commutateur de manoeuvre (20) et transmission des données de mesure cinématiques (8) rendues hybrides sélectionnées, lesquelles se composent des estimations optimales pour la position (34), la vitesse (35) et la covariance de position (36), à l'ordinateur central (6) de l'engin spatial.

10. Procédé selon la revendication 9, **caractérisé en ce qu'**en plus des données du détecteur d'étoiles, les données de mesure de vitesse synchrones (24a) sont utilisées par un gyroscope, lesquelles sont transformées en vitesses (26a) dans le système de référence uniforme.

11. Procédé selon les revendications 9 et 10, **caractérisé en ce que** la réduction (13) des erreurs et de la corrélation d'erreurs est réalisée sous la forme d'une intégration de vitesses (39) et de l'adaptation du maximum de vraisemblance (40) entre les vitesses intégrées (38) et les données transformées (25) du détecteur d'étoiles.

12. Procédé selon les revendications 9 à 11, **caractérisé en ce que** le calibrage circulaire (14) est réalisé sous la forme d'un filtrage passe-bas et d'une conversion (41) en valeurs de polarisation dépendant des vitesses avec ensuite séparation (42) de la polarisation et du facteur d'échelle du détecteur gyroscopique.

13. Procédé selon les revendications 9 à 12, **caractérisé en ce que** le processeur non nominal (16), en cas de panne des détecteurs d'étoiles, détermine les positions et vitesses non nominales (29) avec les valeurs de la polarisation (44) et du facteur d'échelle (45) estimées dans la séparation (42) uniquement à partir des vitesses (26a) dans le système de référence uniforme.

14. Procédé selon les revendications 9 à 13, **caractérisé en ce que** l'identification de tendance (15) est exécutée sous la forme d'une estimation (46) de l'axe de torsion des satellites et d'une estimation (47) de la matrice de rotation delta de la torsion, et l'actualisation de la tendance des paramètres de transformation (37a) s'effectue en utilisant la rotation delta.
